# EUROPEAN PATENT APPLICATION

(11) **EP 3 413 433 A1**
(43) Date of publication of application: **12.12.2018**
(21) Application number: 17760171.3
(22) Date of filing: 03.03.2017
(51) Int. Cl.: H02J 50/10, B60L 11/18, B60M 7/00, H02J 7/00, H02J 50/80, H02J 50/90

(54) **WIRELESS POWER SUPPLY DEVICE AND STRADDLE-TYPE VEHICLE**

(30) Priority: 04.03.2016 JP 2016042522
(71) Applicant: Yamaha Hatsudoki Kabushiki Kaisha, Iwata-shi, Shizuoka 438-8501 (JP)
(72) Inventor: MIYAZAKI, Toshinori, Iwata-shi Shizuoka 438-8501 (JP); HIBINO, Yukio, Iwata-shi Shizuoka 438-8501 (JP)
(74) Representative: Zimmermann, Tankred Klaus
(86) International application number: PCT/JP2017/008500
(87) International publication number: WO 2017/150709

(57) **Abstract**

A power supply device 10 includes a switch 2-1 that switches in accordance with a setting state of a straddle-type vehicle 100 in a parking position, a power transmission circuit 3-1 that supplies power to a power-receiving circuit 6 of the straddle-type vehicle 100 without a contact, a power supply device wireless communication unit 5 that is able to wirelessly communicate with a vehicle wireless communication unit 8 of the straddle-type vehicle 100, and a power supply control unit 4-1 that controls a power supply by the power transmission circuit 3-1, based on a communication result. When the switch 2-1 switches due to installation of the straddle-type vehicle 100 in the parking position, the power supply control unit 4-1 supplies an initial signal to the straddle-type vehicle 100 via the power transmission circuit 3-1 and the power-receiving circuit 6 and starts, if the power supply device wireless communication unit 5 has received a response to the initial signal, a supply of power to the straddle-type vehicle 100 from the power transmission circuit 3-1.

## Description

### TECHNICAL FIELD

The present teaching relates to a power supply device that wirelessly supplies power to a vehicle and a straddle-type vehicle that receives supply of power from the power supply device.

### BACKGROUND ART

Conventionally, a power supply system that supplies power in a wireless manner (a non-contact state) from a power supply device to a vehicle has been known. In the power supply system, for example, a power transmission coil of the power supply device and a power-receiving coil of the vehicle are arranged to be adjacent to one another and a current is caused to flow in the power transmission coil to generate an electromotive force in the power-receiving coil due to electromagnetic induction. In the vehicle, a battery and a charging device that controls charging and discharging of the battery are provided. The charging device charges a secondary battery using the electromotive force that has been generated in the power-receiving coil. In such a wireless-type power supply system, for example, each of a power supply device and a vehicle includes a wireless communication module. When supplying power, a wireless communication is established between wireless communication modules of both of the power supply device and the vehicle and transmission of information used for start and control of power supply is performed. Thus, power supply control in accordance with a condition of the vehicle is enabled.

For example, in Japanese Patent Application Publication No. 2013-198375, a power supply device that enables wireless power supply to an electric vehicle (EV) or a plug-in hybrid vehicle (PHV) which concurrently uses an electric motor and a gasoline engine is disclosed. The power supply device includes a plurality of power supply units and a wireless communication unit. The power supply device is able to specify a power supply unit of the plurality of power supply units which supplies power to a vehicle using power supply unit specific information that is transmitted from the vehicle via the wireless communication unit.

Also, in Japanese Patent Application Publication No. 2012-34487, a power supply system that supplies power to a power-receiving coil that is attached to front basket of a bicycle from a power transmission coil is disclosed. The power supply system transmits a confirmation signal that is used for confirming that a bicycle was parked at regular intervals via a communication device at a power transmission side. When a communication device of the bicycle receives the confirmation signal from the communication device at the power transmission side, the communication device transmits a response signal including ID information. When the communication device at the power transmission side receives the response signal, a control circuit at the power transmission side transmits, after inquiring a server about ID information and confirming the ID information, a power transmission preparation signal from the communication device at the power transmission device. When the communication device of the bicycle receives the power transmission preparation signal, the control circuit of the bicycle sets each unit to a state in which the each unit is able to receive power and the communication device of the bicycle transmits a receiving signal. When the communication device at the power transmission side receives the receiving signal, power transmission from the power transmission coil to the power-receiving coil is started.

### CITATION LIST

### PATENT DOCUMENT

Patent Document 1: Japanese Patent Application Publication No. 2013-198375
Patent Document 2: Japanese Patent Application Publication No. 2012-34487

### SUMMARY OF INVENTION

### PROBLEMS TO BE SOLVED BY INVENTION

The power supply system of Japanese Patent Application Publication No. 2013-198375 described above has a structure mainly for use in a four-wheeled vehicle. In the power supply system for use in a four-wheeled vehicle, a driver drives a vehicle to move the vehicle to a parking position in which power supply is performed. In contrast, a power supply system for use in a straddle-type vehicle, such as a motorcycle, a bicycle, or the like, there is a case in which a driver pushes a vehicle in a state in which the driver is off the vehicle and moves the vehicle to a parking position in which power supply is performed. Therefore, when the straddle-type vehicle is moved to a parking position, in many cases, a power source (an engine, a motor, or the like) of the straddle-type vehicle is stopped. Also, a battery mounted on the straddle-type vehicle is required to be light and small, and therefore, a capacity of the battery of the straddle-type vehicle is small, as compared to a four-wheeled vehicle. Therefore, it is preferable that each of various types of electronic devices, such as a wireless communication unit, a charging circuit, a control unit, or the like in the straddle-type vehicle is put in a resting state in which power consumption is small, for example, when the power source is stopped, or the like, that is, when an operation is not needed.

When the wireless communication unit is in a resting state, the wireless communication unit is not able to inform a power supply device of information, and therefore, for example, unlike the above-described known power supply system, is not able to specify a power transmission unit via a wireless communication. Also, if it is assumed that, without starting up the wireless communication unit, it is not possible to start power supply, a driver is forced to perform an operation used for startup, thus increasing complexity.

In view of the foregoing, it is an object of the present teaching to provide a power supply device which is able to start wireless power supply to a straddle-type vehicle regardless of a startup state of a wireless communication unit of the straddle-type vehicle and a straddle-type vehicle.

### SOLUTION TO PROBLEM AND ADVANTAGEOUS EFFECTS OF INVENTION

### (First Structure)

A wireless power supply device in an embodiment of the present teaching includes a power transmission circuit including a power transmission coil that wirelessly supplies power to a power-receiving circuit that is included in a straddle-type vehicle that has been installed in a parking position and includes a power-receiving coil, a power supply device wireless communication unit that is able to wirelessly communicate with a vehicle wireless communication unit included in the straddle-type vehicle that has been installed in the parking position, and a power supply control unit that controls a power supply by the power transmission circuit, based on a result of a communication with the vehicle wireless communication unit via the power supply device wireless communication unit. The wireless power supply device further includes a parking detection unit that detects, based on a physical position of the straddle-type vehicle, without using the vehicle wireless communication unit that the straddle-type vehicle has been installed in the parking position. The power supply control unit supplies an initial signal to the power-receiving coil of the power-receiving circuit of the straddle-type vehicle that has been installed in the parking position from the power transmission coil of the power transmission circuit and starts a supply of power to the power-receiving coil of the power-receiving circuit of the straddle-type vehicle from the power transmission circuit, if the power supply device wireless communication unit has received a response to the initial signal, which has been transmitted from the vehicle wireless communication unit.

According to the above-described first structure, the power supply control unit controls, based on a result of a communication with the vehicle wireless communication unit included in the straddle-type vehicle via the power supply device wireless communication unit, power supply to the power-receiving coil of the power-receiving circuit included in the straddle-type vehicle from the power transmission circuit. Therefore, power supply in accordance with a state of the straddle-type vehicle is enabled. Also, when it is detected by the parking detection unit, based on the physical position of the straddle-type vehicle, without using the vehicle wireless communication unit that the straddle-type vehicle has been installed in the parking position, an initial signal is supplied to the power-receiving coil of the straddle-type vehicle from the power transmission circuit of the power transmission device. It is possible to give, by supply of the initial signal, a trigger for starting up the vehicle wireless communication unit that performs a wireless communication with the power supply device wireless communication unit to the straddle-type vehicle. As a result, with the initial signal as a trigger, the straddle-type vehicle is able to start up the vehicle wireless communication unit. The straddle-type vehicle is enabled to transmit, by the vehicle wireless communication unit that has been started up, a response to the initial signal to the power supply device wireless communication unit. When the power supply device wireless communication unit receives the response to the initial signal from the vehicle wireless communication unit of the straddle-type vehicle, supply of power to the power-receiving coil of the straddle-type vehicle from the power transmission coil of the power supply device is started. As described above, even when the vehicle wireless communication unit of the straddle-type vehicle is in a resting state, it is possible to achieve, with transmission of the initial signal to the power-receiving coil from the power transmission coil, which is performed with detection of installation of the straddle-type vehicle in the parking position, as a trigger for starting up the vehicle wireless communication unit of the straddle-type vehicle, a state in which a communication between the power supply device wireless communication unit and the vehicle wireless communication unit of the straddle-type vehicle is possible. As a result, when the straddle-type vehicle is installed in the parking position, regardless of a startup state of the vehicle wireless communication unit of the straddle-type vehicle, it is possible to start wireless power supply to the power-receiving coil of the straddle-type vehicle from the power transmission coil.

### (Structure 2)

The wireless power supply device of the above-described first structure may further include a lock mechanism that locks the straddle-type vehicle that has been installed in the parking position. In this case, when the lock mechanism locks the straddle-type vehicle, the parking detection unit is able to detect, based on the physical position of the straddle-type vehicle, that the straddle-type vehicle has been installed in the parking position.

According to the above-described second structure, when the straddle-type vehicle is locked by the lock mechanism, it is detected that the straddle-type vehicle has been installed in the parking position. Therefore, it is possible to detect a setting state of the straddle-type vehicle in the parking position without using the vehicle wireless communication unit.

### (Third Structure)

In the wireless power supply device of the above-described first or second structure, the power supply control unit may be configured to be switchable between a startup state in which the control is executable and a resting state in which all or a part of a processing performed for the control is stopped and power consumption is lower than in the startup state. In this case, the power supply control unit may be configured such that, when it is detected by the parking detection unit that the straddle-type vehicle has been installed in the parking position, the power supply control unit switches to a startup state, if the power supply control unit is in the resting state.

According to the above-described third structure, the power supply control unit is switchable between the startup state and the resting state, and therefore, if the straddle-type vehicle is not installed in the parking position or the like, that is, when control is not needed, it is possible to save power consumption by putting the power supply control unit in the resting state. Also, with detection of installation of the straddle-type vehicle in the parking position as a trigger, the power supply control unit switches to the startup state. Therefore, it is possible to perform control such that, even when the power supply control unit is in the resting state, a wireless communication between the power supply device wireless communication unit and the vehicle wireless communication unit of the straddle-type vehicle is started and supply of power to the power-receiving coil of the straddle-type vehicle from the power transmission coil of the power supply device is started.

### (Fourth Structure)

In the wireless power supply device of any one of the above-described first to third structures, the power supply control unit may be configured such that, after starting the supply of power to the power-receiving coil of the power-receiving circuit of the straddle-type vehicle from the power transmission coil of the power transmission circuit, the power supply control unit regularly transmits a power transmission confirmation request to the vehicle wireless communication unit of the straddle-type vehicle via the power supply device wireless communication unit and stops the power supply by the power transmission circuit, if the power supply device wireless communication unit has not been able to receive a response to the power transmission confirmation request from the vehicle wireless communication unit of the straddle-type vehicle consecutively a predetermined number of times or more.

According to the above-described fourth structure, it is possible to continue, while a wireless communication between the vehicle wireless communication unit of the straddle-type vehicle and the power supply device wireless communication unit is normally performed, power supply to the power-receiving coil from the power transmission coil and to stop, if the wireless communication has been lost due to a failure of a communication system or the like, power supply to the power-receiving coil from the power transmission coil. Therefore, if a fault has occurred in the communication system or some other function, it is possible to stop power transmission.

### (Fifth Structure)

A wireless power supply device in an embodiment of the present teaching includes a plurality of power transmission circuits each of which includes a power transmission coil that wirelessly supplies power to a corresponding one of power-receiving circuits, which is included in a straddle-type vehicle that has been installed in a corresponding one of a plurality of parking positions, and includes a power-receiving coil, a power supply device wireless communication unit that is able to wirelessly communicate with a corresponding one of vehicle wireless communication units included in the plurality of straddle-type vehicles that have been installed in the plurality of parking positions, and a power supply control unit that controls a power supply by a corresponding one of the plurality of power transmission circuits, based on a result of a communication between the vehicle wireless communication unit of a corresponding one of the straddle-type vehicles that have been installed in the plurality of parking positions and the power supply device wireless communication unit. The wireless power supply device further includes a plurality of parking detection units each of which is provided so as to correspond to a corresponding one of the plurality of parking positions and detects, based on a physical position of the straddle-type vehicle, without using the vehicle wireless communication unit that the straddle-type vehicle has been installed in the corresponding parking position. When it is detected by one of the plurality of parking detection units that the straddle-type vehicle has been installed in the parking position that corresponds to the one of the parking detection units, the power supply control unit supplies an initial signal to the power-receiving coil of the straddle-type vehicle that has been installed in the corresponding parking position from the power transmission circuit in the corresponding parking position and starts a supply of power from one of the plurality of power transmission circuits to the power-receiving coil of the power-receiving circuit of the straddle-type vehicle that has been installed in the corresponding parking position, if the power supply device wireless communication unit has received a response to the initial signal, which has been transmitted from the vehicle wireless communication unit of the straddle-type vehicle that has been installed in the corresponding parking position.

According to the above-described fifth structure, even when a straddle-type vehicle is set in one of the plurality of parking positions, it is detected without using the vehicle wireless communication unit that the straddle-type vehicle has been installed in the one of the plurality of parking positions and an initial signal is supplied to the power-receiving coil of the straddle-type vehicle from the power transmission coil of the corresponding power transmission circuit to the straddle-type vehicle that has been installed. Transmission of the initial signal is a trigger for starting up the vehicle wireless communication unit of the straddle-type vehicle and it is possible to achieve a state in which a wireless communication between the power supply device wireless communication unit and the vehicle wireless communication unit is possible. Therefore, even when the straddle-type vehicle is set in one of the plurality of parking positions, regardless of a startup state of the vehicle wireless communication unit of the straddle-type vehicle that has been installed, it is possible to appropriately start wireless power supply to the straddle-type vehicle from the power transmission circuit in the parking position

### (Sixth Structure)

In the wireless power supply device of the above-described fifth structure, the power supply control unit may be configured to include a plurality of power supply control units that are provided so as to correspond to the plurality of parking positions. At least one of the plurality of power supply control units is connected to the power supply device wireless communication unit via a wire and is able to control another one of the power supply control units, based on a result of a communication between the power supply device wireless communication unit and a corresponding one of the vehicle wireless communication units of the straddle-type vehicles that have been installed in the plurality of parking positions.

According to the above-described sixth structure, the power supply device wireless communication unit is able to collectively perform wireless communications with the vehicle wireless communication units of the plurality of straddle-type vehicles in the plurality of parking positions and, based on results of the wireless communications, each of the plurality of power supply control units is able to control a corresponding one of the power supply circuits. Therefore, crosstalk hardly occurs in a wireless communication between the power supply device wireless communication unit and the vehicle wireless communication units of the plurality of straddle-type vehicles.

### (Seventh Structure)

The wireless power supply device of the above-described fifth or sixth structure may be configured such that, when it is detected by one of the plurality of parking detection units that the straddle-type vehicle has been installed in one of the plurality of parking positions which corresponds to the one of the parking detection units, and if power is supplied from the power transmission coil of the power transmission circuit in another one of the parking positions to the power-receiving coil of another one of the straddle-type vehicles which has been installed in the another one of the parking positions, the power supply from the power transmission coil of the power transmission circuit in the another one of the parking positions is stopped and the initial signal is transmitted to the power-receiving coil of the straddle-type vehicle that has been installed in the one of the parking positions from the power transmission coil of the power transmission circuit in the one of the parking positions.

According to the above-described seventh structure, when an initial signal is transmitted from the power transmission coil of one of the power transmission circuits, it is possible to achieve a state in which supply of power from the power transmission coil of another one of the power transmission circuits is stopped. Thus, when an initial signal from the power transmission coil is transmitted in one of the parking positions and a response to the initial signal from the vehicle wireless communication unit of the straddle-type vehicle is received by the power supply device wireless communication unit, it is possible to reduce a wireless communication between the vehicle wireless communication unit of the straddle-type vehicle and the power supply device wireless communication unit in another one of the parking positions. Therefore, it is possible to execute power supply start processing in a single one of the parking positions. Also, it is possible to reduce supply of power in a state in which a wireless communication between the vehicle wireless communication unit of the straddle-type vehicle and the power supply device wireless communication unit in another one of the parking positions is suspended. Note that it is possible to restart, once supply of power by the power transmission circuit in one of the parking positions is started, supply of power which has been stopped in the power transmission circuit in another one of the parking positions.

### (Eighth Structure)

In any one of the above-described first to seventh structures, it is possible to make a rise of the initial signal soft start. That is, it is possible to control a rise of the initial signal such that a signal voltage increases with time. For example, the power supply control unit is able to control the power transmission circuit such that the initial signal rises in a soft start manner. Thus, it is possible to reduce a situation in which the power-receiving circuit falls in an overvoltage state due to the initial signal. As a result, it is possible to reduce a withstand voltage measurements in the power-receiving circuit. As described above, at a rise of the initial signal, it is preferable that a signal voltage gradually increases with time to an extent to which an overvoltage state is not caused. As an example of a configuration in which a signal voltage increases with time at a rise of the initial signal, there is a configuration in which the signal voltage gradually increases with time from a start to a time when the initial signal reaches a maximum value. As a configuration in which the signal voltage increases with time, a configuration of a stepwise increase, a continuous increase, or a combination of a stepwise increase and a continuous increase may be employed.

### (Ninth Structure)

A straddle-type vehicle in an embodiment of the present teaching includes a battery, a power-receiving circuit including a power-receiving coil that wirelessly receives a supply of power from a power transmission coil of a power supply device, a charging circuit that monitors a state of the battery and controls charging of the battery by the power that has been received via the power-receiving circuit, a vehicle wireless communication unit that wirelessly communicates with a power supply device wireless communication unit included in the power supply device and transmits information based on the state of the battery, which has been monitored by the charging circuit, to the power supply device wireless communication unit, and a vehicle control unit that controls the power-receiving circuit, the charging circuit, and the vehicle wireless communication unit. The vehicle wireless communication unit is switchable between a startup state in which the communication is executable and a resting state in which all or a part of the processing performed for the communication is stopped and power consumption is lower than in the startup state. If the power-receiving coil of the power-receiving circuit has received an initial signal from the power transmission coil of the power supply device, the vehicle control unit puts the vehicle wireless communication unit in a startup state, causes the vehicle wireless communication unit to transmit a response to the initial signal to the power supply device wireless communication unit, and puts the charging circuit in a state in which the battery is able to be charged.

According to the above-described ninth structure, the straddle-type vehicle includes the vehicle wireless communication unit that transmits information based on a battery state to the power supply device. Therefore, the straddle-type vehicle is able to receive power supply in accordance with the battery state from the power supply device. Also, the vehicle wireless communication unit is switchable between a startup state and a resting state, and therefore, it is possible to save power consumption by putting, if a wireless communication is not needed, the vehicle wireless communication unit in a resting state. When the power-receiving coil of the power-receiving circuit receives an initial signal from the power transmission coil of the power supply device, with this as a trigger, the vehicle wireless communication unit is put in a startup state and a wireless communication with the power supply device wireless communication unit is enabled. Then, based on the wireless communication between the power supply device wireless communication unit and the vehicle wireless communication unit, supply of power to the power-receiving coil from the power transmission coil and charging are started. Thus, regardless of a startup state of the vehicle wireless communication unit, it is possible to start wireless power supply to a straddle-type vehicle from the power supply device.

### (Tenth Structure)

In the straddle-type vehicle of the above-described ninth structure, the vehicle control unit is switchable between a startup state in which the control is executable and a resting state in which all or a part of processing performed for the control is stopped and power consumption is lower than in the startup state, and the vehicle control unit may be configured to switch to a startup state, if the vehicle control unit is in a resting state when the power-receiving circuit receives the initial signal.

According to the tenth structure, the vehicle control unit is switchable between the startup state and the resting state, and therefore, it is possible to save power consumption by putting, if control is not needed, the vehicle control unit in the resting state. Also, with the initial signal that is received by the power-receiving coil of the power-receiving circuit as a trigger, the vehicle control unit switches to the startup state, and therefore, even when the vehicle control unit is in the resting state, it is possible to perform control such that a wireless communication between the power supply device wireless communication unit and the vehicle wireless communication unit is started and supply of power to the power-receiving coil of the straddle-type vehicle from the power transmission coil of the power supply device is started.

### (Eleventh Structure)

In the straddle-type vehicle of the above-described ninth or tenth structure, the initial signal includes a startup signal and an identification signal, if the power-receiving coil of the power-receiving circuit has received the startup signal, the vehicle control unit puts the vehicle wireless communication unit in the startup state to achieve a state in which a communication with the power supply device wireless communication unit is possible, and if the power-receiving coil of the power-receiving circuit has received the identification signal after the startup signal, the vehicle control unit causes the vehicle wireless communication unit to transmit a response to the identification signal to the power supply device wireless communication unit.

According to the eleventh structure, it is possible to use the startup signal to the power-receiving coil from the power transmission coil of the power supply device as a trigger for starting up the vehicle wireless communication unit. Furthermore, the vehicle wireless communication unit is able to transmit information indicating that the straddle-type vehicle itself is the correct power supply destination to the power supply device by transmitting a response to the identification signal that is suppled after transmitting the response to the startup signal. Thus, supply of power from the power supply device is started.

A method for wirelessly supplying power to a straddle-type vehicle from a power supply device in an embodiment of the present teaching includes detecting that the straddle-type vehicle has been installed in a parking position, based on a physical position of the straddle-type vehicle and, without using a vehicle wireless communication unit included in the straddle-type vehicle and a power supply device wireless communication unit that is included in the power supply device and is able to wirelessly communicate with the vehicle wireless communication unit,
if an installation of the straddle-type vehicle in the parking position has been detected, starting up the vehicle wireless communication unit of the straddle-type vehicle by suppling an initial signal to a power-receiving coil of a power-receiving circuit included in the straddle-type vehicle from a power transmission coil of a power transmission circuit that is included in the power supply device and provided in the parking position,
receiving, by the power supply device wireless communication unit, a response to the initial signal from the vehicle wireless communication unit via a wireless communication,
if the power supply device wireless communication unit has received the response to the initial signal, starting a supply of power to the power-receiving coil of the power-receiving circuit of the straddle-type vehicle from the power transmission coil of the power transmission circuit,
and after supply of power to the power-receiving coil of the power-receiving circuit from the power transmission coil of the power transmission circuit has been started, controlling a power supply to the power-receiving coil from the power transmission coil of the power transmission circuit, based on a result of a wireless communication between the power supply device wireless communication unit and the vehicle wireless communication unit.

### BRIEF DESCRIPTION OF DRAWINGS

[FIG. 1] FIG. 1 is a functional block diagram illustrating an example of a structure of a power supply device according to an embodiment.
[FIG. 2] FIG. 2 is a diagram illustrating an example of a structure of a lock system according to the embodiment.
[FIG. 3] FIG. 3 is a top view illustrating a structure of a rack illustrated in FIG. 2 when viewed from top.
[FIG. 4] FIG. 4 is a diagram illustrating an example of a lock state of a locking device illustrated in FIG. 3.
[FIG. 5] FIG. 5 is a diagram illustrating a more detailed example of a structure of the power supply device and a bicycle illustrated in FIG. 1.
[FIG. 6] FIG. 6 is a flowchart illustrating processing of a control unit that operates as a master.
[FIG. 7] FIG. 7 is a flowchart illustrating an example of processing of startup power transmission performed by the control unit (master).
[FIG. 8] FIG. 8 is a flowchart illustrating an example of processing of identification power transmission performed by the control unit (master).
[FIG. 9] FIG. 9 is a diagram illustrating an example of waveforms of a power reception voltage of a power-receiving circuit in startup power transmission, identification power transmission, and normal power transmission.
[FIG. 10] FIG. 10 is a flowchart illustrating an example of processing of normal power transmission performed by the control unit (master).
[FIG. 11] FIG. 11 is a table illustrating an example of management data.
[FIG. 12] FIG. 12 is a flowchart illustrating an example of an operation of a control unit that serves as a slave.
[FIG. 13] FIG. 13 is a flowchart illustrating an example of processing of startup power transmission performed by the control unit (slave).
[FIG. 14] FIG. 14 is a flowchart illustrating an example of processing of identification power transmission performed by the control unit (slave).
[FIG. 15] FIG. 15 is a flowchart illustrating an example of processing of normal power transmission performed by the control unit (slave).
[FIG. 16] FIG. 16 is a flowchart illustrating an example of an operation of a bicycle installed in a parking position.
[FIG. 17] FIG. 17 is a diagram illustrating an example of a waveform of a startup signal, which exhibits a soft start at a rise.
[FIG. 18] FIG. 18 is a view illustrating the power supply device according to the embodiment.

### DESCRIPTION OF EMBODIMENTS

A power supply device and a straddle-type vehicle according to an embodiment of the present teaching will be described below with reference to the accompanying drawings. In this embodiment, as the straddle-type vehicle, an electric power-assisted bicycle will be described as an example. In the drawings, the same or corresponding parts are denoted by the same reference symbol and the description for the parts is not repeated. Also, dimensions of a component member in each drawing do not closely represent actual dimensions of the component member, a dimension ratio of each component member, or the like.

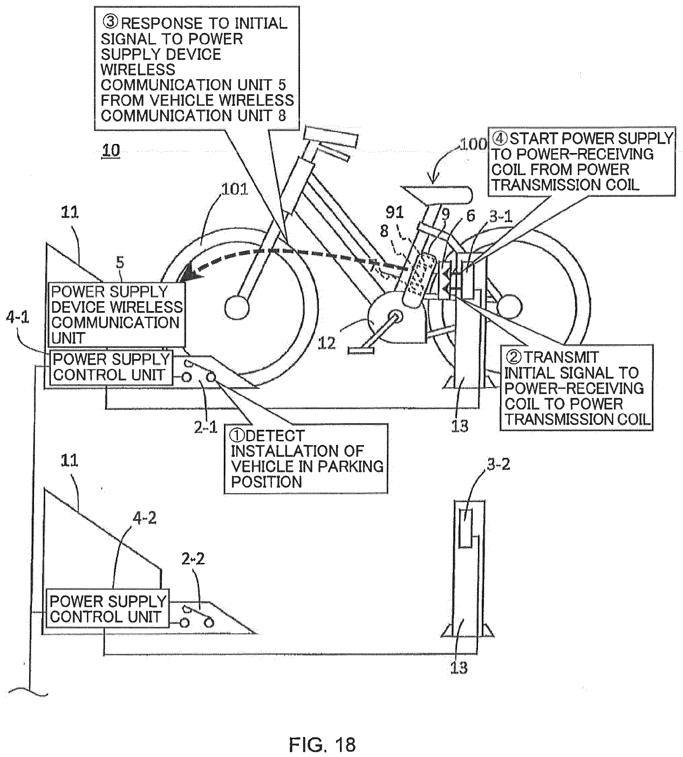

FIG. 18 is a view illustrating a power supply device 10 in this embodiment. As illustrated in FIG. 18, the power supply device 10 includes a power transmission circuit 3-1, a power supply device wireless communication unit 5, and a power supply control unit 4-1. The power transmission circuit 3-1 wirelessly supplies power to a power-receiving circuit 6 which is included in a straddle-type vehicle 100 installed in a parking position and includes a power-receiving coil. The power supply device wireless communication unit 5 is able to perform a wireless communication with a vehicle wireless communication unit 8 that is included in the straddle-type vehicle 100 installed in the parking position. The power supply control unit 4-1 controls power supply performed by the power transmission circuit 3-1, based on a result of the communication with the vehicle wireless communication unit 8 of the straddle-type vehicle 100 via the power supply device wireless communication unit 5. The power supply device 10 further includes a parking detection unit 2-1 that detects that the straddle-type vehicle 100 has been installed in the parking position, based on a physical location of the straddle-type vehicle 100, without using the vehicle wireless communication unit 8. The power supply control unit 4-1 supplies an initial signal to the power-receiving coil of the power-receiving circuit 6 of the straddle-type vehicle 100 that has been installed in the parking position from a power transmission coil of the power transmission circuit 3-1. When the power supply device wireless communication unit 5 receives a response to the initial signal, which has been transmitted from the vehicle wireless communication unit 8, the power supply control unit 4-1 starts supply of power to the power-receiving coil of the power-receiving circuit 6 of the straddle-type vehicle 100 from the power transmission circuit 3-1.

### [Example of Structure of Power Supply Device]

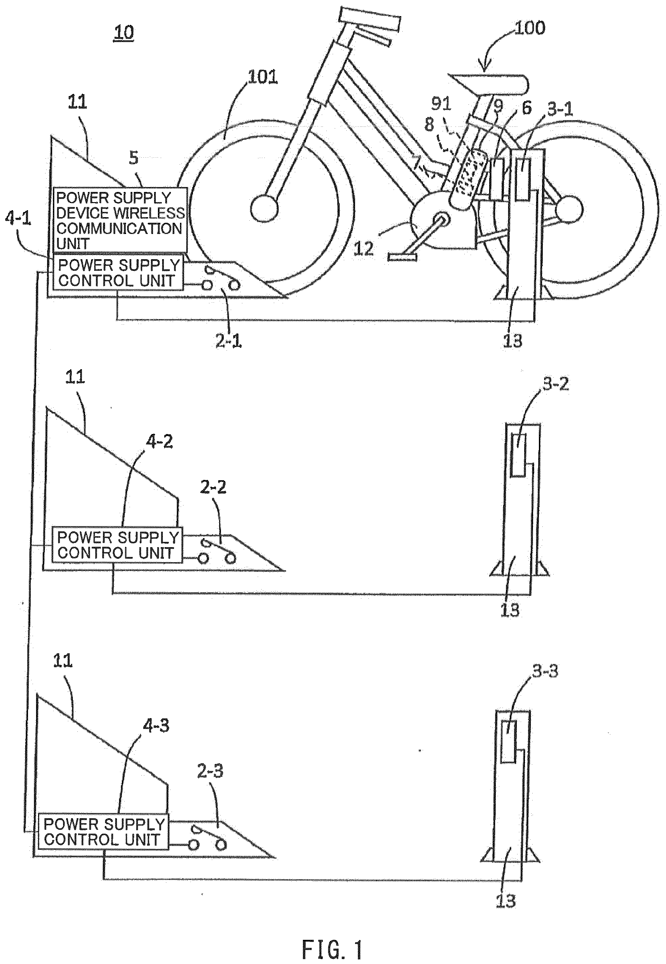

FIG. 1 is a functional block diagram illustrating an example of a structure of a power supply device in this embodiment. The wireless power supply device 10 (which will be hereinafter referred to as the "power supply device 10") illustrated in FIG. 1 is a device that is able to wirelessly supply power to a bicycle that is installed in each parking position in a parking lot in which a plurality of parking positions has been set. The power supply device 10 includes a plurality of switches 2-1 to 2-3, a plurality of power transmission circuits 3-1 to 3-3, and a plurality of power supply control units 4-1 to 4-3, each of which corresponds to a corresponding one of the plurality of parking positions. These components will be sometimes collectively called switches 2, power transmission circuits 3, and power supply control units 4 below. The power supply device 10 further includes the power supply device wireless communication unit 5 that is able to wirelessly communicate with each of a plurality of bicycles that are installed in the plurality of parking positions. The power supply device wireless communication unit 5 is connected to the power supply control unit 4-1, which is one of the plurality of power supply control units 4-1 to 4-3. The plurality of power supply control units 4-1 to 4-3 are connected to one another via wires so as to be able to communicate with one another.

The switch 2 switches in accordance with an installation state of a bicycle in a parking position. The switch 2 may be configured, for example, to switch depending on whether or not a part (for example, a wheel 101) of the bicycle is installed in a rack 11 provided in the parking position. In this embodiment, as an example, the switch 2 has a structure in which the switch 2 switches in conjunction with a lock mechanism that locks in a state in which the bicycle 100 is installed in a rack. The switch 2 is connected to the power supply control unit 4. Therefore, the power supply control unit 4 is able to detect, based on switching of the switch 2, that the bicycle 100 has been placed in a position in which the bicycle 100 is able to receive power supply from the power transmission circuit 3. The power supply control unit 4 controls start or termination of power supply to the bicycle 100, which is performed by the power transmission circuit 3, in accordance with an operation of the switch 2.

The power transmission circuit 3 wirelessly supplies power to the power-receiving circuit 6 of the straddle-type vehicle 100 installed in the parking position. A wireless power transmission system is not limited to a specific type but, for example, an electromagnetic induction type or a magnetic resonance type may be used. In these types, an AC current is caused to flow in a power transmission coil included in the power transmission circuit 3 to generate an AC current in the power-receiving coil of the power-receiving circuit 6. In the example illustrated in FIG. 1, the power transmission circuit 3 is provided in a power supply stand 13. The power transmission circuit 3 and the power-receiving circuit 6 are arranged in positions that are opposed to one another in a state in which a bicycle has been installed in a parking position. A specific example of a structure of the power transmission circuit 3 and the power-receiving circuit 6 will be described later.

The power supply control unit 4 controls power supply performed by the power transmission circuit 3, based on a result of a communication between the power supply device wireless communication unit 5 and the bicycle 100. When the bicycle 100 is installed in a parking position and thereby the switch 2 connected to the power supply control unit 4 switches, the power supply control unit 4 supplies an initial signal to the power-receiving circuit 6 of the bicycle 100 from the power transmission circuit 3. That is, when the power supply control unit 4 detects installation of the bicycle 100, based on switching of the switch 2, the power supply control unit 4 supplies an initial signal to the power-receiving circuit 6 from the power transmission circuit 3. The bicycle 100 includes the vehicle wireless communication unit 8. When the power-receiving circuit 6 receives the initial signal, the vehicle wireless communication unit 8 of the bicycle 100 is started up and a wireless communication between the vehicle wireless communication unit 8 and the power supply device wireless communication unit 5 of the power supply device 10 is established. The vehicle wireless communication unit 8 of the bicycle 100 transmits a response indicating that the above-described initial signal has been received to the power supply device wireless communication unit 5 of the power supply device 10. When the power supply device wireless communication unit 5 receives the response, the power supply control unit 4 starts supply of power to the bicycle 100 from the power transmission circuit 3.

The bicycle 100 includes a drive unit 12 including a power unit (motor) that assists pedal stepping force and a battery unit 9 that supplies power to the drive unit 12. The battery unit 9 includes a battery. The battery of the battery unit 9 is charged by power that is supplied via the power-receiving circuit 6. The battery unit 9 includes a battery management unit (which will be hereinafter referred to as a battery management controller 91 (which will be hereinafter referred to as a BMC 91)) which monitors and controls the battery. The BMC 91 includes a charging circuit that controls charging of the battery. Note that BMC is sometimes referred to as a battery management unit (BMU) or a battery management system (BMS).

Also, the bicycle 100 includes a vehicle control unit 7 that controls the power-receiving circuit 6, the vehicle wireless communication unit 8, and the BMC 91. The vehicle wireless communication unit 8 switches between a startup state in which a communication is executable and a resting state in which power consumption is lower than in the startup state. The vehicle control unit 7 of the bicycle 100 is able to control switching of the vehicle wireless communication unit 8 between the startup state and the resting state. For example, when the power-receiving circuit 6 receives an initial signal from the power supply device 10, the vehicle control unit 7 of the bicycle 100 puts, if the vehicle wireless communication unit 8 is in the resting state, the vehicle wireless communication unit 8 in the startup state. The vehicle wireless communication unit 8 transmits a response to the initial signal to the power supply device 10 in accordance with a command from the vehicle control unit 7. In this case, the vehicle control unit 7 further puts the charging circuit of the BMC 91 in a state in which the charging circuit is able to charge the battery. Also, during charging of the battery, it is possible to transmit battery information monitored by the BMC 91 from the vehicle wireless communication unit 8 to the power supply device wireless communication unit 5 of the power supply device 10.

The power supply control unit 4 of the power supply device 10 controls the power transmission circuit 3, based on the battery information that has been transmitted from the vehicle wireless communication unit 8 to the power supply device wireless communication unit 5. For example, when information that indicates completion of charging of the battery (full charge) of the battery is transmitted from the vehicle wireless communication unit 8 to the power supply device wireless communication unit 5, the power supply control unit 4 stops power supply from the power transmission circuit 3. Note that information that is transmitted via a wireless communication between the vehicle wireless communication unit 8 and the power supply device wireless communication unit 5 may include, for example, information that indicates a state of the battery, such as capacity, current, voltage, temperature, or the like, of the battery, power transmission control information or the like, such as an instruction of stopping power supply, or the like.

The power supply control unit 4 causes, after starting supply of power from the power transmission circuit 3 to the bicycle 100, the power supply device wireless communication unit 5 to regularly transmit a power transmission confirmation request (which may be also referred to as a power transmission permission request) to the vehicle wireless communication unit 8. If the power supply device wireless communication unit 5 has not been able to receive a response to the power transmission confirmation request from the bicycle 100 consecutively a predetermined number of times or more, the power supply control unit 4 stops power supply performed by the power transmission circuit 3. Thus, it is possible to avoid continuation of power supply in a state in which it is not possible to perform a wireless communication between the bicycle 100 and the power supply device 10.

In the example illustrated in FIG. 1, the power supply control unit 4-1 connected to the power supply device wireless communication unit 5 relays a communication between the bicycle and the other power supply control units 4-2 and 4-3. That is, the power supply device wireless communication unit 5 performs wireless communications with not only the bicycle 100 in a parking position of the switch 2-1 but also bicycles in parking positions of the other switches 2-2 and 2-3. The power supply control unit 4-1 delivers information from the bicycles in the parking positions of the other switches 2-2 and 2-3, which has been received by the power supply device wireless communication unit 5, to the other power supply control units 4-2 and 4-3. For example, the power supply control unit 4-1 is able to control the other power supply control units 4-2 and 4-3, based on a result of a communication between the power supply device wireless communication unit 5 and a wireless communication unit of the bicycle in each of the parking positions. Thus, each of the power supply control units 4-2 and 4-3 that are not directly connected to the power supply device wireless communication unit 5 is also able to acquire information from the bicycle installed in the corresponding one of the parking positions via the power supply device wireless communication unit 5 and the power supply control unit 4-1. Note that, as a modified example, the power supply device 10 may be configured to include a plurality of communication unit each of which corresponds to the corresponding one of the plurality of parking positions. For example, a communication unit may be provided in each of the rack 11 or the power supply stand 13 in each of the parking positions. In this case, because a distance between the plurality of parking positions is short, a measure that keeps crosstalk from occurring is required. As illustrated in FIG. 1, the power supply device wireless communication unit 5 collectively performs wireless communications with the bicycles in the plurality of parking positions, so that crosstalk may be avoided.

A control unit 8, the BMC 91, and a wireless communication unit 7 may be mounted, for example, on a substrate included in the battery unit 9. At least one of the control unit 8, the BMC 91, and the wireless communication unit 7 may be mounted in an external part (for example, a substrate in the drive unit 12, or the like) of the battery unit 9. A mounting position of the power-receiving circuit 6 is not limited to a position close to the battery unit 9, which is illustrated in FIG. 1. For example, the power-receiving circuit 6 may be arranged in a position distant from the battery unit 9 and thus be connected to the battery unit 9 via a cable provided along a frame of the bicycle 100.

### [Example of Structure of Lock System]

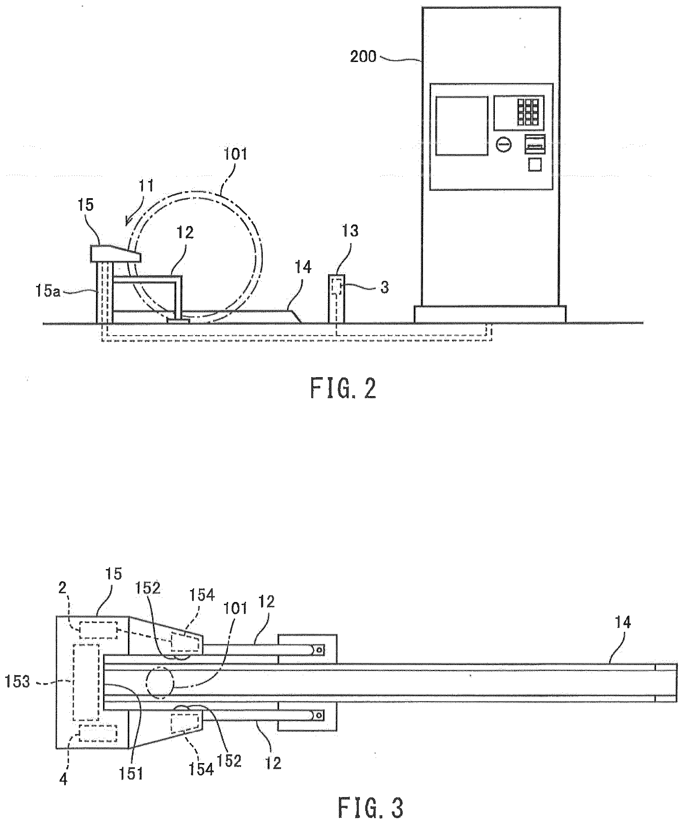

An example of a structure of a lock system that locks a bicycle in each parking position and monitors and manages a lock state of the bicycle in each parking position will be described below. FIG. 2 is a diagram illustrating an example of a structure of a lock system. The lock system includes the rack 11 used for installing a bicycle and a management device 200. The rack 11 is provided in each parking position. The rack 11 illustrated in FIG. 2 is one of a plurality of racks that correspond to the plurality of parking positions and illustration of the other ones of the racks is omitted. A single management device 200 is connected to the plurality of racks 11.

In the example illustrated in FIG. 2, the rack 11 includes a locking device 15 that is able to lock a front wheel 101 of the bicycle 100, a rail 14 used for guiding the front wheel 101 of the bicycle 100 to the locking device 15, and a guide 12 that assists guiding of the front wheel 101. The power supply stand 13 that stores the power transmission circuit 3 illustrated in FIG. 1 is provided next to the rack 11. The locking device 15 and the power transmission circuit 3 of the power supply stand 13 are connected to the management device 200 via a cable. The locking device 15 is supported by a supporting column 15a in a position at a certain height from the ground.

FIG. 3 is a top view illustrating a structure of the rack 11 illustrated in FIG. 2 when viewed from top. The locking device 15 includes a case including a recessed part 151 in which the front wheel 101 of the bicycle is insertable. The locking device 15 includes a pair of movable arms 152 that are inwardly projectable from surfaces of the recessed part of the case, which are opposed to one another, and drive units 154 that drive the movable arms 152. Also, the locking device 15 includes a sensor 153 that detects that the front wheel 101 has been inserted in the recessed part 151.

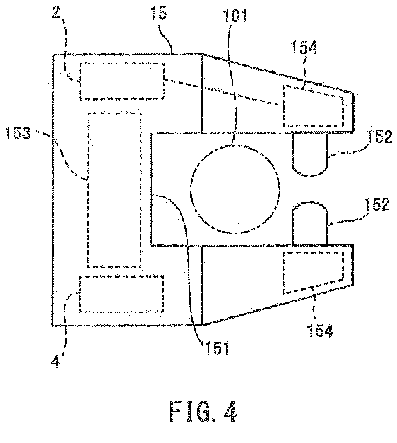

The locking device 15 illustrated in FIG. 3 is in a state in which the movable arms 152 do not project from the case, that is to say, a non-lock state. When it is detected by the sensor 153 that the front wheel 101 of the bicycle has been inserted in the recessed part, the drive units 154 causes the movable arms 152 to project from the case to achieve a lock state. FIG. 4 is a diagram illustrating an example of the lock state. It is possible to inhibit, by the movable arms 152, the front wheel 101 of the bicycle from being removed from the recessed part 151.

The locking device 15 transmits a signal that indicates the lock state or not to the management device 200. The management device 200 transmits a lock releasing signal that instructs release of the lock state to the locking device 15, as necessary. When the locking device 15 receives the lock releasing signal from the management device 200, the locking device 15 causes the drive units 154 to retract the movable arms 152 to the inside of the case. Thus, it is possible to achieve the non-lock state. Note that the locking device 15 may be configured to transmit, if the sensor 153 has detected insertion of the front wheel 101, a detection signal to the management device 200. When the management device 200 receives the detection signal from the locking device 15, the management device 200 transmits a lock signal that instructs to lock to the locking device 15 and the locking device 15 is able to achieve the lock state, based on the lock signal.

Switching of the switch 2 illustrated in FIG. 1 may be performed in conjunction with the lock mechanism. For example, in a structure illustrated in FIG. 2, a limit switch provided inside the locking device 15 may be used. In this case, the locking device 15 may be configured to switch in accordance with a projection state of the movable arms 152 or detection of insertion of the front wheel 101 by the sensor 153. As described above, in the lock mechanism of the locking device 15, it is possible to configure a movable member used for locking a part of the bicycle 100 (a straddle-type vehicle) such that the switch 2 switches between on and off in accordance with an operation of switching between the lock state and a non-lock state. Thus, when the bicycle 100 is installed in the rack 11 and is locked, the switch 2 perform switching.

Each of the power supply control unit 4 and the power supply device wireless communication unit 5 may be arranged inside of the locking device 15. Note that installation positions of the switch 2, the power supply control unit 4, and the power supply device wireless communication unit 5 are not limited to the rack 11. For example, at least a part of the switch 2, the power supply control unit 4, and the power supply device wireless communication unit 5 may be provided in the management device 200 or the power supply stand 13. In this case, the switch 2 may be configured to switch based on a signal that indicates a lock state from the locking device 15.

Note that a structure of the lock system is not limited to the examples of the structure, which are illustrated in FIGS. 2 to 4. For example, the arrangement of the power supply stand 13 is not limited to the example of FIG. 2 and FIG. 3. The power supply stand 13 is arranged as appropriate in accordance with the position of the power-receiving circuit 6 of the bicycle.

### [Specific Example of Power Transmission Circuit and Power-receiving Circuit]

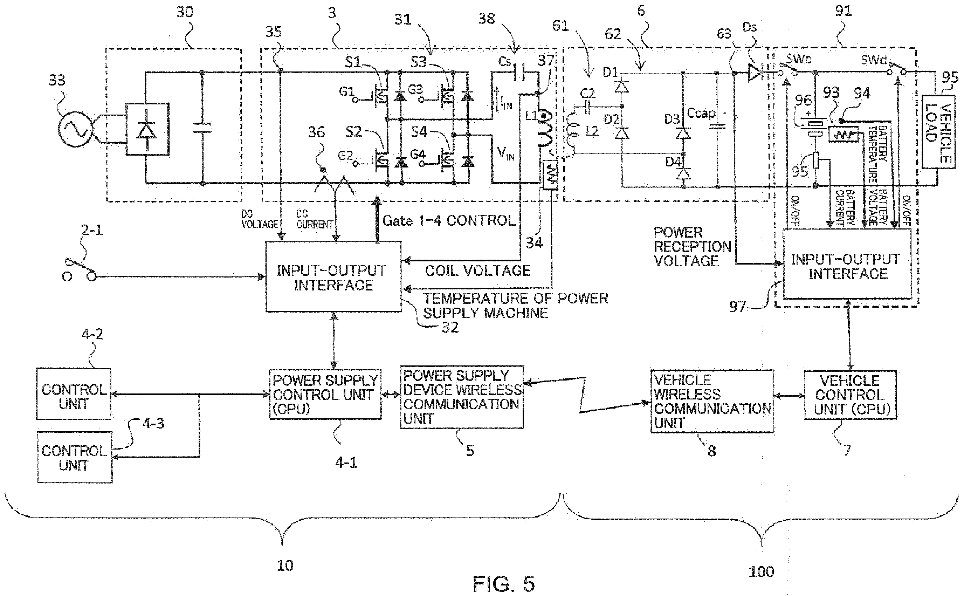

FIG. 5 is a diagram illustrating a more detailed example of a structure of the power supply device 10 and the bicycle 100. The power transmission circuit 3 and the power supply control unit 4 in FIG. 5 correspond to the power transmission circuit 3-1 and the power supply control unit 4-1 illustrated in FIG. 1, respectively.

### <Example of Structure of Power Supply Device 10>

In the example of FIG. 5, the power transmission circuit 3 of the power supply device 10 is connected to a DC power supply unit 30. Also, in the power supply device 10, the power transmission circuit 3, the power supply control unit 4-1, and the switch 2-1 are connected to one another via an input and output interface 32 and are communicable with one another. The power supply control unit 4-1 is connected to the power supply device wireless communication unit 5 and the power supply control units 4-2 and 4-3 in the other parking positions, and the power supply control unit 4-1, the power supply device wireless communication unit 5, and the power supply control units 4-2 and 4-3 are able to communicate with one another. Note that, although, in FIG. 5, as an example, the power transmission circuit 3 that is connected to the power supply control unit 4-1 is illustrated, it is also possible to similarly configure the power transmission circuits 3 that are connected to the power supply control units 4-2 and 4-3.

The DC power supply unit 30 is a stabilized DC power source that generates a DC power source from an AC power source 33. As the DC power supply unit 30, a constant voltage power source (for example, a commercially available AC adaptor) which is controlled such that an output voltage is constant may be used. Note that, as the DC power supply unit 30, a constant current power source an output current of which is controlled to be constant or a constant-voltage-and-constant-current power source an output voltage and an output current of which are caused to be constant may be used.

The power transmission circuit 3 includes an inverter 31 that converts a DC current that is supplied from the DC power supply unit 30 to an AC current and a resonance circuit 38 to which the AC current obtained by conversion by the inverter 31 is input. The resonance circuit 38 includes a capacitor Cs and a power transmission coil L1 that are connected in series. When supplying power, the power transmission coil L1 is arranged near a power-receiving coil L2 of the bicycle 100. When an AC current is caused to flow in the power transmission coil L1, a magnetic flux changes and the AC current flows also in the power-receiving coil L2 due to electromagnetic induction. Thus, power is wirelessly transmitted.

The inverter 31 includes four switching elements S1 to S4 used for controlling a direction of a current that is to be input to the resonance circuit 38 and timing of the input. An operation of the inverter 31 is controlled by a drive signal that is input to each of respective gates G1 to G4 of the switching elements S1 to S4. Thus, it is possible to input a PWM (pulse width) controlled AC current to the resonance circuit 38. The input and output interface 32 may be configured to include a control IC used for PWM-controlling the inverter 31 and a gate driver used for driving the gates G1 to G4 of the inverter 31. Note that, if a CPU that forms the power supply control unit 4 has a PWM control function, a structure in which the control IC is not provided in the input and output interface may be employed.

The power transmission circuit 3 includes a DC voltage detection unit 35 used for detecting a DC voltage from the DC power supply unit 30, a DC current sensor 36 that detects a DC current, a coil voltage detection unit 37 used for detecting a voltage of the power transmission coil L1, and a temperature sensor 34 that detects temperature of the power transmission coil L1. Thus, a DC voltage, a DC current, a voltage of the power transmission coil L1, and temperature of the power transmission coil L1 in the power transmission circuit 3 are output from the input and output interface 32 to the power supply control unit 4.

The power supply control unit 4-1 may be implemented by the CPU that is connected to the input and output interface 32. The power supply control unit 4-1 controls the inverter 31, based on the DC voltage, the DC current, the voltage of the power transmission coil L1, and the temperature of the power transmission coil L1 in the above-described power transmission circuit 3. The power supply control unit 4-1 is able to stop, if any one of the DC voltage, the DC current, the voltage of the power transmission coil L1, and the temperature of the power transmission coil L1 indicates an abnormal value, an operation of the inverter 31 and stop supply of power.

The power supply control unit 4-1 detects switching of the switch 2 via the input and output interface 32. It is possible to detect by switching of the switch 2-1 that the bicycle 100 has been installed in a parking position and that a bicycle has been removed from a parking position. The power supply control unit 4-1 controls the inverter 31, based on a state of the switch 2-1. For example, when the switch 2-1 switches from off (a state indicating that the bicycle is not installed) to on (a state indicating that the bicycle is installed), the power supply control unit 4-1 causes the inverter 31 to be driven and an initial signal to be transmitted from the power transmission coil L1. Thus, it is possible to perform startup power transmission and identification power transmission, which will be described later. Also, if, when the switch 2-1 has switched from on to off, the inverter 31 is in operation, the operation of the inverter 31 is stopped and supply of power is stopped.

It is possible to connect the power supply control unit 4-1 to the other power supply control units 4-2 and 4-3, for example, via a controller area network (CAN). In this case, it is possible to further provide a communication unit used for performing communications between the power supply control unit 4-1 and the other power supply control units 4-2 and 4-3. Note that each of the other power supply control units 4-2 and 4-3 may be configured by an independent CPU.

The power supply control unit 4-1 may be configured to be switchable between a startup state in which processing performed for control is executable and the resting state in which power consumption is lower than that in the startup state. The resting state of the power supply control unit 4-1 is, for example, the state in which all or a part of processing performed for control is stopped. In this example, a resting state of the power supply control unit 4-1 is, as an example, a mode (a sleep mode) in which a clock used for normal control of the CPU that forms the power supply control unit 4-1 is stopped. If an external interrupt occurs in a state in which the CPU is in a sleep more, the CPU shifts to the startup state from the sleep mode.

For example, if a state in which the power transmission circuit 3 and the power supply device wireless communication unit 5 do not operate has continued for a predetermined time in a state in which the switch 2-1 is off, the power supply control unit 4-1 switches to a resting state from a startup state. When the switch 2-1 switches in accordance with installation of the bicycle 100 while the power supply control unit 4-1 is in a resting state, the power supply control unit 4-1 switches from a resting state to a startup state.

Note that, similarly, the other power supply control units 4-2 and 4-3 may be configured to be switchable between a startup state and a resting state. For example, when a state in which the switch 2-2 is off has continued for a predetermined time, the power supply control unit 4-2 is put in a resting state and, when the switch 2-2 switches on from off, the power supply control unit 4-2 is put in a startup state.

Each of the power supply device wireless communication unit 5 of the power supply device 10 and the vehicle wireless communication unit 8 of the bicycle 100 includes a wireless communication module including an antenna. The communication module of the power supply device wireless communication unit 5 may be configured by another IC that is different from the CPU that forms the power supply control unit 4-1. For a communication between the power supply device wireless communication unit 5 and the vehicle wireless communication unit 8, for example, Bluetooth (a registered trademark) or the like may be used.

### <Example of Structure of Bicycle 100>

The bicycle 100 includes the power-receiving circuit 6, the BMC 91, and a vehicle load 95. The power-receiving circuit 6 wirelessly receives supply of power from the power supply device 10. The BMC 91 monitors a state of a battery 96 and controls charging and discharging of the battery 96. The battery 96 is connected to the power-receiving circuit 6 and the vehicle load 95 via the BMC 91. The vehicle load 95 is, for example, a power unit, such as a motor or the like, of the drive unit 12, a display device included in the bicycle 100, or the like. The BMC 91 and the power-receiving circuit 6 are connected to the vehicle control unit 7 via an input-output interface 97. The vehicle control unit 7 is, for example, configured by a CPU.

The power-receiving circuit 6 includes a resonance circuit 61 and a rectifier circuit 62. The resonance circuit 61 generates an AC current by electromagnetic induction by an AC current of the resonance circuit 38 of the power transmission circuit 3. The rectifier circuit 62 rectifies and filters the AC current that is generated by the resonance circuit 61 and outputs the rectified and filtered AC current to the BMC 91. That is, the rectifier circuit 62 converts received AC power to DC power that may be charged in the battery 96.

The resonance circuit 61 includes the power-receiving coil L2 and a capacitor C2 that are connected in series. The rectifier circuit 62 includes diodes D1 and D2 that are connected to both sides of one end of the resonance circuit 61 so as to face in the same direction, diodes D3 and D4 that are connected to both sides of the other end of the resonance circuit 61 so as to face in the same direction, and a capacitor Ccap connected to the diodes D1 and S2 and the diodes D3 and D4 in parallel.

Also, the power-receiving circuit 6 includes a reverse voltage prevention diode Ds between the rectifier circuit 62 and the BMC 91. A detection unit 63 that detects a power reception voltage is provided on a side of the reverse voltage prevention diode Ds which is closer to the rectifier circuit 62. A current from the battery 96 does not flow on the side which is closer to the rectifier circuit 62 because of the reverse voltage prevention diode Ds, and therefore, in the detection unit 63 that detects a power reception voltage, a DC voltage (a power reception voltage) caused by power reception via the resonance circuit 61 is detected. Note that the reverse voltage prevention diode Ds and the detection unit 63 may be provided not in the power-receiving circuit 6 but in the BMC 91.

The BMC 91 includes a charging switch SWc used for permitting or prohibiting charging into the battery 96 and a discharging switch SWd used for permitting or prohibiting discharging into the vehicle load 95 from the battery 96. Also, the BMC 91 includes a current sensor 95 that detects a charging and discharging current of a battery, a battery voltage detection circuit 94 that detects a voltage of the battery 96, and a temperature sensor 93 that detects temperature of the battery. The battery 96 includes, for example, cells of a plurality of lithium ion batteries. The battery voltage detection circuit 94 detects a voltage for each cell and a voltage (an overall cell voltage) of the cells as a whole.

In the example illustrated in FIG. 5, as described above, the reverse voltage prevention diode Ds is connected between the rectifier circuit 62 that converts received AC power to DC power and the charging switch SWc. Thus, it is possible to detect a power reception voltage by the detection unit 63 which is located closer to the rectifier circuit 62 than the reverse voltage prevention diode Ds is.

A power reception voltage, a battery current, a battery voltage, and temperature of the battery are output to the vehicle control unit 7 via the input-output interface 97. Also, a signal that controls on and off of the charging switch SWc and the discharging switch SWd is input to the BMC 91 from the vehicle control unit 7 via the input-output interface 97. The vehicle control unit 7 is able to control prohibition or permission of charging and prohibition or permission of discharging, based on the power reception voltage, the battery current, the battery voltage, and the temperature of the battery. Note that, separate from the CPU of the vehicle control unit 7, a control IC that performs control of charging and discharging may be provided in the BMC 91. Also, a part of the vehicle control unit 7 and the BMC 91 may be formed by a single IC.

The vehicle control unit 7 is connected to the vehicle wireless communication unit 8. The vehicle control unit 7 notifies the vehicle wireless communication unit 8 of information based on the state of the battery, which has been received from the BMC 91, and causes the vehicle wireless communication unit 8 to transmit the information to the power supply device 10. Thus, in the power supply device 10, it is possible to control power supply from the power transmission circuit 3 in accordance with the state of the battery, which is monitored by the BMC 91.

The vehicle wireless communication unit 8 may be formed by a separate IC from the CPU that forms the vehicle control unit 7. The vehicle wireless communication unit 8 is switchable between a startup state in which a communication is executable and a resting state in which power consumption is lower than in the startup state. The vehicle wireless communication unit 8 stops, in the resting state, all or a part of processing performed for a communication. In this example, as an example, it is assumed that the resting state of the vehicle wireless communication unit 8 is a state in which a circuit power source of the vehicle wireless communication unit 8 has been turned off. The vehicle control unit 7 may be configured to perform switching between the startup state and the resting state of the vehicle wireless communication unit 8, and also, the vehicle wireless communication unit 8 may be configured to be automatically put in the resting state if the vehicle wireless communication unit 8 has not executed communication processing (has not received a communication processing request from the vehicle control unit 7 or the like) for a certain time.

The vehicle control unit 7 may be also configured to be switchable between the startup state in which processing performed for control is executable and the resting state in which power consumption is lower than in the startup state. The resting state of the vehicle control unit 7 is, for example, a state in which all or a part of processing performed for control is stopped. In this example, as an example, it is assumed that the resting state of the vehicle control unit 7 is a mode (a sleep mode) in which a clock used for normal control of the CPU that forms the vehicle control unit 7 is stopped. When an external interrupt occurs in a state in which the CPU is in a sleep mode, the CPU shifts from the sleep mode to a startup state.

### [Operation Example]

Next, an operation example of the power supply device 10 will be described. As an example, a case in which the power supply control unit 4-1 connected to the power supply device wireless communication unit 5 illustrated in FIG. 1 is caused to operate as a master and each of the other power supply control units 4-2 and 4-3 is caused to operate as a slave that operates in accordance with control of the master will be described.

### <Operation Example of Power Supply Control Unit 4-1 (Master) of Power Supply Device 10>

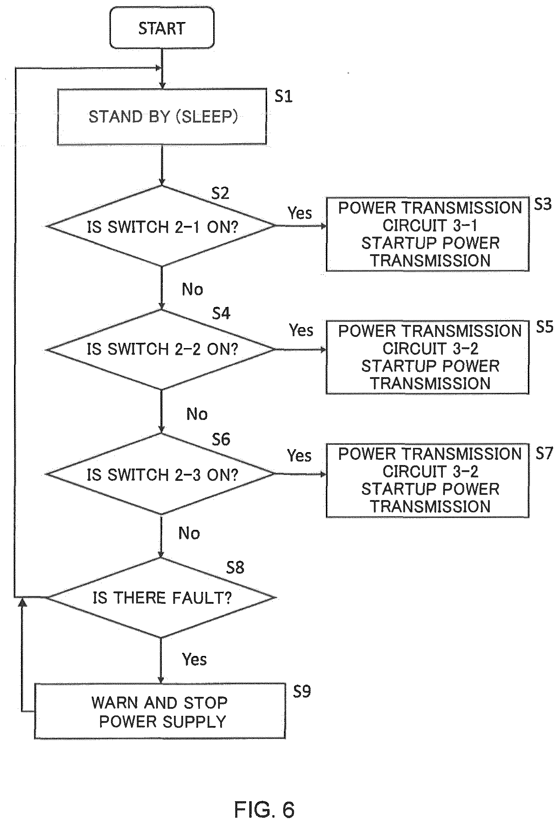

FIG. 6 is a flowchart illustrating processing of the power supply control unit 4-1 that operates as the master. In FIG. 6, when the power supply control unit 4-1 is in a standby state, the CPU of the power supply control unit 4-1 is in a sleep mode (Step S1). When the bicycle 100 is parked in a parking position of the power supply control unit 4-1 and the front wheel 101 is locked by the locking device 15, the switch 2-1 connected to the power supply control unit 4-1 is turned on (Yes in Step S2). When the switch 2-1 is turned on, the CPU of the power supply control unit 4-1 is changed to the startup state from the sleep mode, controls the power transmission circuit 3-1, and executes startup power transmission (Step S3). That is, with switching of the switch 2-1 as a trigger, the power supply control unit 4-1 is started up.

When the bicycle 100 is parked not in the parking position of the power supply control unit 4-1 but in a parking position of the power supply control unit 4-2 and is locked, the switch 2-2 is turned on (Yes in Step S4). In this case, the power supply control unit 4-1 that serves as the master instructs the power supply control unit 4-2 that operates as the slave to perform startup power transmission (S5). Also, when the bicycle 100 is parked in the parking position of the power supply control unit 4-3 and is locked, the switch 2-3 is turned on (Yes in Step S4) and the power supply control unit 4-1 that serves as the master instructs the power supply control unit 4-3 that operates as the slave to perform startup power transmission (S7).

The power supply control unit 4-1 executes fault detection (Step S8) and, if there is a fault, outputs a warning and stops supply of power by the power transmission circuit 3 (Step S9).

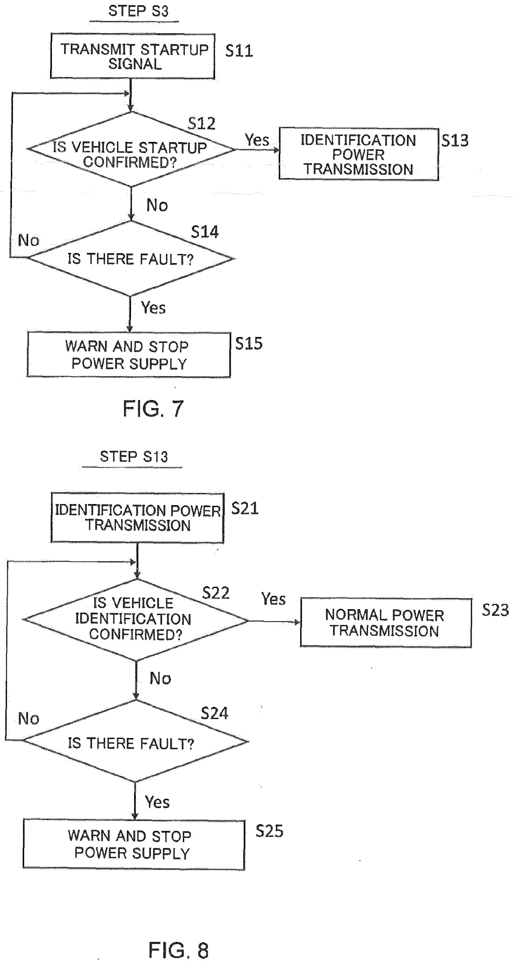

In startup power transmission of FIG. 6 (Step S3), processing illustrated in FIG. 7 is executed. In FIG. 7, the power supply control unit 4-1 first causes the power transmission circuit 3-1 to transmit a startup signal as an initial signal (Step S11) and waits to receive a response signal to the startup signal for a predetermined time (Step S12). At this time, the power supply control unit 4-1 is able to put the power supply device wireless communication unit 5 of the power supply device 10 a state in which it is possible to establish a communication (a connection setting) with the vehicle wireless communication unit 8 of the bicycle and wait for a response signal. When this startup signal is detected in the power-receiving circuit 6 of the bicycle 100, the vehicle control unit 7 of the bicycle 100 starts up the vehicle wireless communication unit 8. The vehicle wireless communication unit 8 transmits a response signal indicating that the vehicle wireless communication unit 8 has received the startup signal, that is, a signal that indicates confirmation of a startup power transmission and power reception to the power supply device 10. At this time, the vehicle wireless communication unit 8 is able to transmit information necessary for establishing a communication with the power supply device wireless communication unit 5 of the power supply device 10. Thus, it is possible to establish (connect) a wireless communication between the vehicle wireless communication unit 8 and the power supply device wireless communication unit 5. For example, the vehicle wireless communication unit 8 is able to record an identifier (a communication ID) of a communication with the power supply device wireless communication unit 5, which has been established. The communication ID may be included in data that is transmitted via a wireless communication between the vehicle wireless communication unit 8 and the power supply device wireless communication unit 5. Thus, if the power supply device wireless communication unit 5 communicates simultaneously with the vehicle wireless communication units 8 of a plurality of bicycles, it is possible to identify one of the vehicle wireless communication units 8, which is a communication partner, using the communication ID. When the power supply device wireless communication unit 5 of the power supply device 10 receives a response signal from the vehicle wireless communication unit 8, the power supply device wireless communication unit 5 notifies the power supply control unit 4-1 that the power supply device wireless communication unit 5 has received the response signal from the bicycle in the parking position of the switch 2-1. When the power supply control unit 4-1 receives the response signal (Yes in Step S12), the power supply control unit 4-1 executes identification power transmission (Step S13).

Note that processing of establishing a wireless communication between the power supply device wireless communication unit 5 of the power supply device 10 and the vehicle wireless communication unit 8 of the bicycle 100 and confirming a vehicle startup (Step S12) is not limited to the above-described example. For example, a structure in which, when the power-receiving circuit 6 of the bicycle 100 receives the startup signal, the vehicle wireless communication unit 8 of the bicycle 10 is started up and is put in a connection-waiting state may be employed. The vehicle wireless communication unit 8 may be configured not to transmit a response to the startup signal. In this case, the power supply device wireless communication unit 5 of the power supply device 10 detects, after startup power transmission, the vehicle wireless communication unit 8 that is located in a communication range and is in a connection-waiting state. When the power supply device wireless communication unit 5 detects the vehicle wireless communication unit 8 and a communication between the power supply device wireless communication unit 5 and the vehicle wireless communication unit 8 is enabled, the power supply control unit 4-1 determines that a vehicle startup has been confirmed (Yes in Step S12) and is able to execute identification power transmission (Step S13).

If, even after a predetermined time has elapsed since transmission of a startup signal, a response signal has not been received (No in Step S12), the power supply control unit 4-1 determines whether or not there is a fault (Step S14). If there is not a fault (No in Step 14), the power supply control unit 4-1 waits for a response signal again (Step S12). If there is a fault, the power supply control unit 4-1 outputs a warning and stops power supply processing (Step S15).

In identification power transmission (Step S13) of FIG. 7, processing illustrated in FIG. 8 is executed. In FIG. 8, the power supply control unit 4-1 causes the power transmission circuit 3-1 which corresponds to the switch 2-1 to transmit an identification signal as an initial signal (Step S21) and waits to receive a response signal to the identification signal for a predetermined time (Step S22). When this identification signal is detected by the power-receiving circuit 6 of the bicycle 100, the vehicle control unit 7 of the bicycle 100 causes the vehicle wireless communication unit 8 to transmit a response signal (an identification power transmission and power reception confirmation signal) which indicates the identification signal has been received. The power supply device wireless communication unit 5 of the power supply device 10 receives this response signal and notifies the power supply control unit 4-1 that the power supply device wireless communication unit 5 has received the repose signal from the bicycle 100 in the parking position of the switch 2-1. As described above, the power supply control unit 4-1 is able to confirm based on reception of the response signal that a power supply destination is the bicycle in the parking position of the switch 2-1. When the power supply control unit 4-1 receives the response signal (Yes in Step S22), the power supply control unit 4-1 executes normal power transmission (Step S23). Thus, supply of power is started. That is, in normal power transmission, power is supplied from the power supply device 10 to the bicycle 100 via the power transmission circuit 3-1 and the power-receiving circuit 6. In normal power transmission, the power supply control unit 4-1 commands the power transmission circuit 3-1 that corresponds to the switch 2-1 to continue continuous supply of power. If No in Step S22, that is, if the power supply control unit 4-1 is not able to receive a response signal, the power supply control unit 4-1 performs fault determination (Step S24) and executes fault processing (Step S25), as necessary. For example, in fault determination in Step S14 and S24, if a determination result indicating No has been obtained consecutively a predetermined number of times in Step S12 and S22 (that is, if the power supply control unit 4-1 is not able to receive a response from the bicycle 100), the power supply control unit 4-1 determines a communication error (occurrence of a fault) with the bicycle 100.

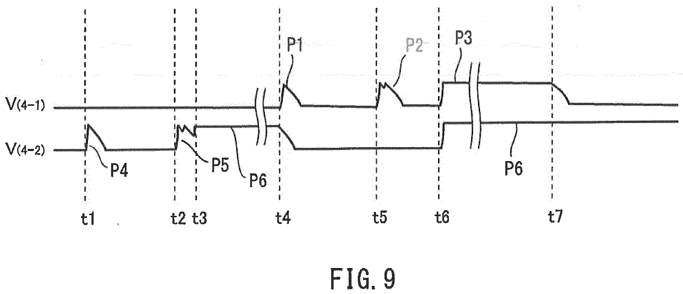

An example of a signal waveforms of startup power transmission and identification power transmission will be described below. FIG. 9 is a diagram illustrating an example of waveforms of a power reception voltage of the power-receiving circuit 6 in startup power transmission, identification power transmission, and normal power transmission. In FIG. 9, a waveform V (4-1) indicates a waveform of a voltage that is detected by the detection unit 63 that detects a power reception voltage when startup power transmission, identification power transmission, and normal power transmission are performed by the power supply control unit 4-1. A waveform V (4-2) indicates a waveform of a voltage that is detected by the detection unit 63 that detects a power reception voltage when startup power transmission, identification power transmission, and normal power transmission are performed by the power supply control unit 4-2.

In the example illustrated in FIG. 9, at a time t4, a startup signal P1 is supplied in accordance with control performed by the power supply control unit 4-1. In this example, the startup signal P1 is generated by stopping, immediately after power supply has been continued for a certain short time, the power supply in the power transmission circuit 3-1. The waveform of the startup signal P1 of a power reception voltage in the power-receiving circuit 6 is a waveform that falls immediately after a certain time has elapsed since a rise. At a time t5 after the startup signal P1 has been received, an identification signal P2 is supplied. The identification signal P2 is generated by intermittently repeating short-time power supply a plurality of number of times in the power transmission circuit 3-1. In the power-receiving circuit, a waveform of a power reception voltage of an intermittent pattern in which a rise and a fall are repeated in a short time is detected.

At a time t6 after the identification signal P2 has been received, supply of power by the power supply control unit 4-1 is started and, at a time t7, the supply of power ends (P3). From the time t6 to the time t7, a power reception voltage that is detected by the detection unit 63 is constant.

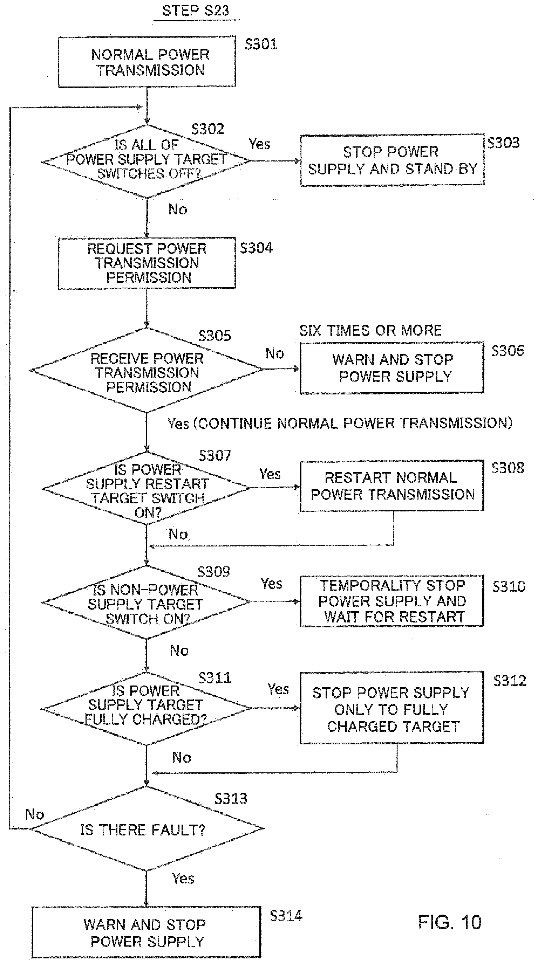

Next, processing example of the power supply control unit 4-1 during power supply will be described. In normal power transmission (S23) of FIG. 8, processing illustrated in FIG. 10 is executed. In FIG. 10, the power supply control unit 4-1 causes the inverter 31 of the power transmission circuit 3-1 to be driven to start supply of power via the power transmission circuit 3-1 and the power-receiving circuit 6 (S301). At this time, the power supply control unit 4-1 updates management data used for managing a state of each parking position, which is recorded in a memory that is accessible from the CPU.

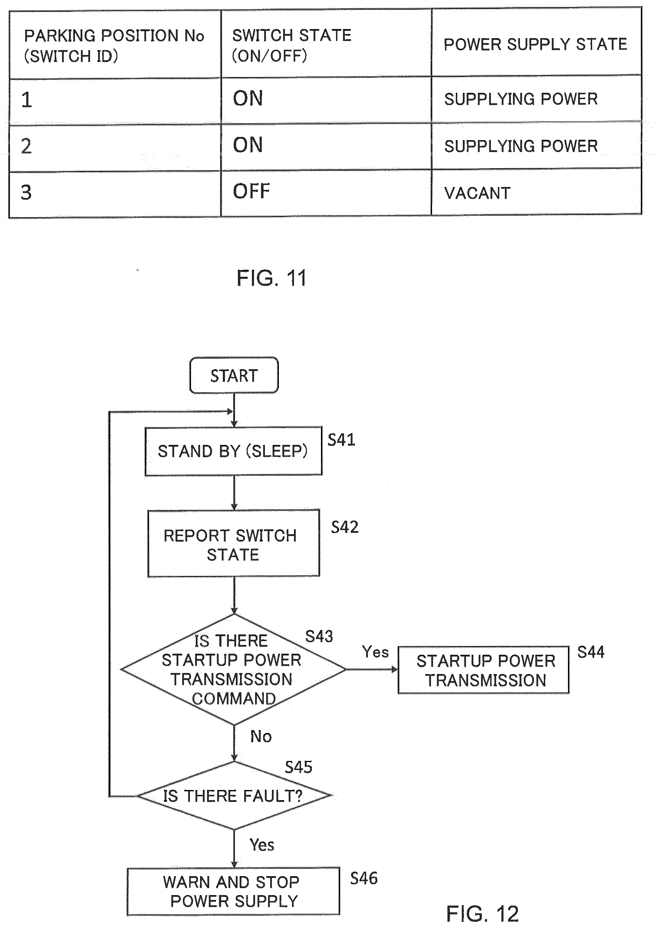

FIG. 11 is a table illustrating an example of management data. The management data of FIG. 11 is recorded such that an identification number of each parking position (in this case, as an example, IDs of the switches 2-1, 2-2, and 2-3), data that indicates a state of a switch (on or off), and data that indicates a power supply state are associated with one another. The data that indicates the state of the switch is automatically updated in accordance with switching of the switches 2-1 to 2-3. Also, for example, when starting supply of power to a bicycle in the parking position of the switch 2-1, the power supply control unit 4-1 updates the data of the power supply state, which corresponds to a switch ID "1" of the switch 2-1, to "SUPPLYING POWER".

As the power supply state that is recorded in the management data, in addition to "SUPPLYING POWER", for example, "VACANT", which indicates a state in which there is not a bicycle in a parking position, "RESTART-WAITING", which indicates a state in which supply of power is temporarily suspended and restart is waited for, and "STOP", which indicates a state in which power supply is stopped because of full charge, unsuccessful termination, or the like, or the like is recorded.

With reference to FIG. 10 again, in Step S302, the power supply control unit 4-1 determines whether or not all of switches in parking positions which are currently in a state of a power supply target are off. For example, the power supply control unit 4-1 is able to determine whether or not all of the switches are off, based on whether or not the state of the switch is "OFF" in all of records in which the power supply state in the management data is "SUPPLYING POWER" or "RESTART-WAITING". If Yes in Step S302, the power supply control unit 4-1 stops power supply from the power transmission circuit 3 in a parking position that is a power supply target and returns to be in a standby state (for example, Step S1 in FIG. 1). Note that, when stopping power supply of the power transmission circuits 3-2 and 3-3 in the other parking positions, the power supply control unit 4-1 outputs a stop command to the other power supply control units 4-2 and 4-3.

If No in Step S302, the power supply control unit 4-1 transmits a signal (a power transmission permission request signal) which requests permission for power transmission to the vehicle wireless communication unit 8 of a bicycle in a parking position that corresponds to a switch of "SUPPLYING POWER" from the power supply device wireless communication unit 5 (Step S304). A replay to the power transmission permission request signal has not transmitted from the vehicle wireless communication unit 8 within a predetermined time, the power supply device wireless communication unit 5 retransmits a power transmission permission request signal. If a reply has not been transmitted consecutively a predetermined number of times (for example, six times) (No in Step S305), the power supply control unit 4-1 determines that a fault has occurred in a communication with the vehicle wireless communication unit 8 of the bicycle, outputs a warning of a communication error with the bicycle, and stops power supply from the power transmission circuit 3-1 (Step S306). The power supply state in the management data, which corresponds to the switch 2-1, is updated to "STOP". At this time, in the other switch 2-2 or 2-3, if power supply and a communication are normally performed, the power supply control unit 4-1 does not have to stop the power supply and the communication.

If a reply to the power transmission permission request signal has been transmitted (Yes in Step S305), the power supply control unit 4-1 determines whether or not there is the power transmission circuit 3 that waits for restart of power supply (Step S307) and, if so, restarts power supply by the power transmission circuit 3 (S308).

The power supply control unit 4-1 determines whether or not the switch 2 is in a parking position that is not currently a power supply target (Step S309). For example, the power supply control unit 4-1 is able to perform this determination, based on whether or not there is a record in which the power supply state is "VACANT" and the switch state is "ON" in the management data. In this case, whether or not a bicycle has been installed in a parking position in which power is not currently supplied and there is the power transmission circuit 3 that is about to start startup power transmission for power supply is determined. If Yes in Step S309, the power supply control unit 4-1 temporarily stops power supply by the power transmission circuit 3 that is currently "SUPPLYING POWER" and updates the corresponding management data to "RESTART-WAITING".

Thus, it is possible to temporality stop, when a bicycle has been installed in one single parking position and a switch (for example, 2-2) is turned on, power supply from the power transmission circuit (for example, 3-1) in another parking position. When startup power transmission and identification power transmission from the power transmission circuit 3-2 of the switch 2-2 are performed and thus power supply is restarted (when the power supply state in the management data is changed to "SUPPLYING POWER"), power supply from the power transmission circuit 3-1, which has been temporarily stopped, is restarted (because it is determined to be Yes in Step S307 described above and No in Step in Step S309 described above).

As a specific example, in the example illustrated in FIG. 9, the startup signal P4 and an identification signal P5 are transmitted from the power transmission circuit 3-2 to the power-receiving circuit 6 of a bicycle in the parking position of the switch 2-2 at a time t1 and a time t2, respectively, and power supply is started at a time t3 (P6). At the time t4, the switch 2-1 is turned on during power supply from the power transmission circuit 3-2 and the startup signal P1 is transmitted from the power transmission circuit 3-1. Furthermore, the identification signal P2 is transmitted from the power transmission circuit 3-1 at a time t5 and power supply (P3) is started at a time t6. In the power transmission circuit 3-2, supply of power (P6) is temporarily suspended between the time t4 and the time t6. That is, when another switch 2-1 is turned on at the time t4, the power transmission circuit 3-2 temporarily stops power supply and restarts, when power supply from another power transmission circuit 3-1 that corresponds to the another switch 2-1 is started, power supply.

With reference to FIG. 10 again, in Step S311, if the power supply control unit 4-1 has received a notification that the battery 96 is in a state of full charge from the vehicle wireless communication unit 8 of a bicycle in a parking position that is currently a power supply target (Yes), the power supply control unit 4-1 stops supply of power of the power transmission circuit 3 that corresponds to the parking position (Step S312). Thus, if the BMC 91 of the bicycle to which power is being supplied detects full charge and reports the full charge via the vehicle wireless communication unit 8 and the power supply device wireless communication unit 5, the power supply control unit 4-1 is able to stop power supply by the corresponding power transmission circuit 3. After power supply is stopped, the bicycle leaves the parking position, the switch 2 is turned off (the power supply state in the management data is updated to "VACANT"), and furthermore, a state of stop is maintained until another bicycle is installed and the switch is turned on.

The power supply control unit 4-1 determines whether or not there is a fault (Step S313), outputs, if there is a fault, a warning, and stops supply of power by the power transmission circuit 3 in a parking position in which the fault occurred (S314). If there is not a fault (No in Step S313), the process returns to processing of Step 302.

### <Operation Example of Power Supply Control Unit 4-2 (Slave) of Power Supply Device 10>

FIG. 12 is a flowchart illustrating an example of an operation of the power supply control unit 4-2 that operates as a slave. While the power supply control unit 4-2 stands by (Step S41), when a bicycle is installed in the parking position of the switch 2-2 and the switch 2-2 is turned on, the power supply control unit 4-2 reports the power supply control unit 4-1 that operates as a master that the bicycle has been installed in the parking position of the switch 2-2 and the switch 2-2 is turned on. The power supply control unit 4-1 that has received this report transmits a startup power transmission command to the power supply control unit 4-2. When the power supply control unit 4-2 receives the command (Yes in Step S43), the power supply control unit 4-2 executes startup power transmission (Step S44). If, even after waiting for a predetermined time, the power supply control unit 4-2 has not received the command (No in Step S43), the power supply control unit 4-2 determines whether or not there is a fault (Step S45), outputs, if there is a fault, a warning and stops power supply (Step S46), and returns, if there is not a fault, to be in a standby state (Step S41).

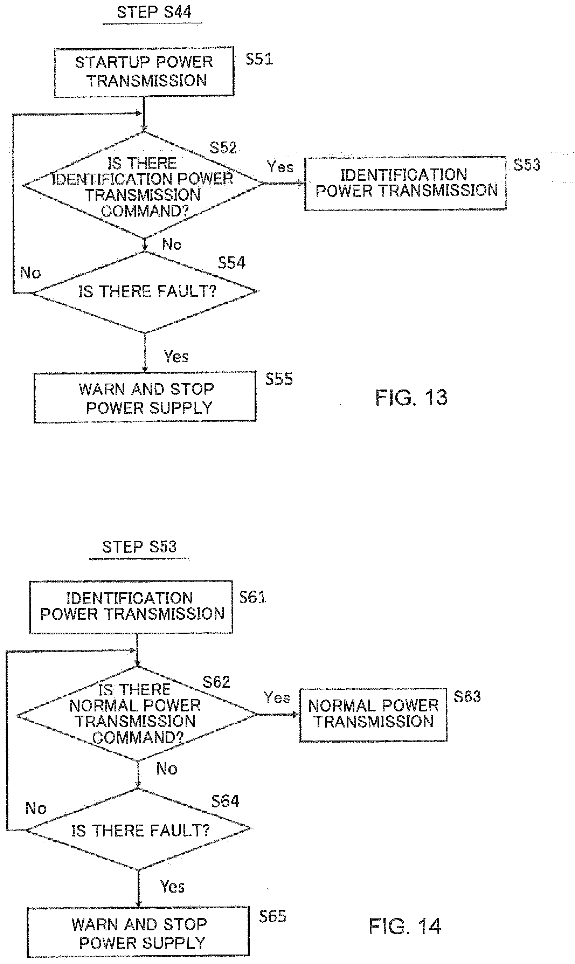

In startup power transmission (Step S44) of FIG. 12, processing illustrated in FIG. 13 is executed. In FIG. 13, the power supply control unit 4-2 first causes the power transmission circuit 3-2 to transmit a startup signal as an initial signal (Step S51) and waits for a predetermined time (Step S52). The bicycle 100 that has received the startup signal from the power transmission circuit 3-2 starts up the vehicle wireless communication unit 8 and transmits a response signal to the power supply device wireless communication unit 5 of the power supply device 10 from the vehicle wireless communication unit 8. A response that has been received by the power supply device wireless communication unit 5 is notified to the power supply control unit 4-1 as the master and the power supply control unit 4-1 outputs an identification power transmission command to the power supply control unit 4-2. When the power supply control unit 4-2 receives the identification power transmission command (Yes in Step S52), the power supply control unit 4-2 executes identification power transmission (Step S53). If, even after a predetermined time has elapsed since transmission of the startup signal, the power supply control unit 4-2 has not received the identification power transmission command (No in Step S52), the power supply control unit 4-2 determines whether or not there is a fault (Step S54). If there is not a fault (No in Step S54), the power supply control unit 4-2 waits for a response signal (Step S52) again. If there is a fault, the power supply control unit 4-2 outputs a warning and stops power supply processing (Step S55).

In identification power transmission (Step S53) of FIG. 13, processing illustrated in FIG. 14 is executed. In FIG. 14, the power supply control unit 4-2 causes the power transmission circuit 3-2 that corresponds to the switch 2-2 to transmit an identification signal as an initial signal (Step S61) and waits for a predetermined time (Step S62). The vehicle wireless communication unit 8 of the bicycle 100, which has received the identification signal from the power transmission circuit 3-2, transmits a response indicating that the vehicle wireless communication unit 8 has received the identification signal to the power supply device wireless communication unit 5 of the power supply device 10. The power supply device wireless communication unit 5 notifies the power supply control unit 4-1 as the master of the response and the power supply control unit 4-1 outputs a normal power transmission command to the power supply control unit 4-2. When the power supply control unit 4-2 receives the normal power transmission command (Yes in Step S62), the power supply control unit 4-2 executes normal power transmission (Step S63). Thus, supply of power from the power transmission circuit 3-2 that corresponds to the switch 2-2 is started. At this time, the power supply control unit 4-1 commands the power transmission circuit 3-2 to continue continuous supply of power. Note that, if the power supply control unit 4-2 does not receive a normal power transmission command from the power supply control unit 4-1 (No in Step S62), the power supply control unit 4-2 executes fault determination (Step S64) and, as necessary, fault processing (Step 65). In fault determination of Steps S54 and S64, for example, if a determination result of No in Steps S52 and S62 has been obtained consecutively a predetermined number of times, the power supply control unit 4-2 is able to determine a communication error with the bicycle 100.

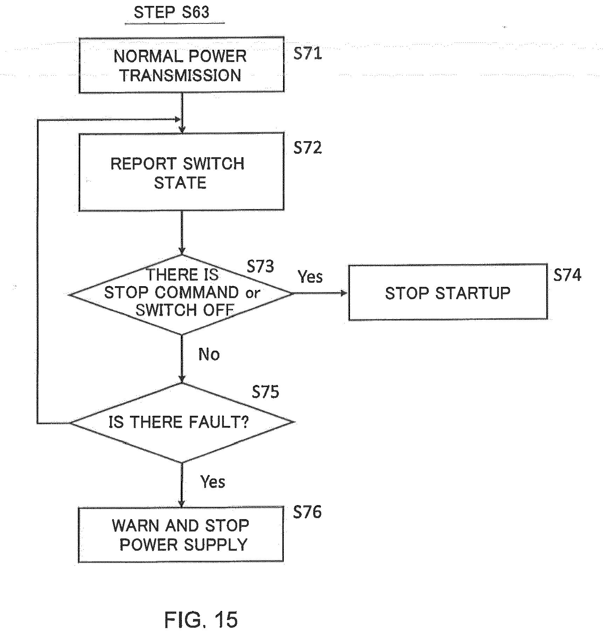

In normal power transmission (S63) of FIG. 14, processing illustrated in FIG. 15 is executed. In Step S71 of FIG. 15, the power supply control unit 4-2 causes the inverter 31 of the power transmission circuit 3-2 to be driven and starts supply of power via the power transmission circuit 3-2 and the power-receiving circuit 6. At this time, the power supply control unit 4-2 updates the power supply state of the parking position that corresponds to the switch 2-2 in the management data to "SUPPLYING POWER". The power supply control unit 4-2 reports the state of the switch 2-2 to the power supply control unit 4-1 (Step S72).

During power supply to a bicycle in the parking position of the switch 2-2 from the power transmission circuit 3-2, the power supply control unit 4-1 transmits a transmission permission request signal to the bicycle via the power supply device wireless communication unit 5 and receives a reply to the signal. The power supply control unit 4-1 further receives information that indicates a battery state of the bicycle or the like. When there is no longer a reply to the transmission permission request signal or when the power supply control unit 4-1 receives information indicating that the battery is fully charged, the power supply control unit 4-1 transmits a stop command for power supply to the power supply control unit 4-2.

When the power supply control unit 4-2 receives the stop command from the power supply control unit 4-1 (Yes in Step S73), the power supply control unit 4-2 stops power supply by the power transmission circuit 3-2 (Step S74). Also, if the power supply control unit 4-2 has detected that the switch 2-2 has switched to off from on (Yes in Step S73), the power supply control unit 4-2 stops power supply by the power transmission circuit 3-2 (Step S74). If the power supply control unit 4-2 has detected a fault (Yes in Step S75), the power supply control unit 4-2 outputs a warning and stops power supply (Step S76). As described above, the power supply control unit 4-2 as a slave operates in accordance with control by the power supply control unit 4-1 as the master, and thereby, power supply based on a result of a communication with the bicycle 100 is enabled.

### <Operation Example of Bicycle 100>

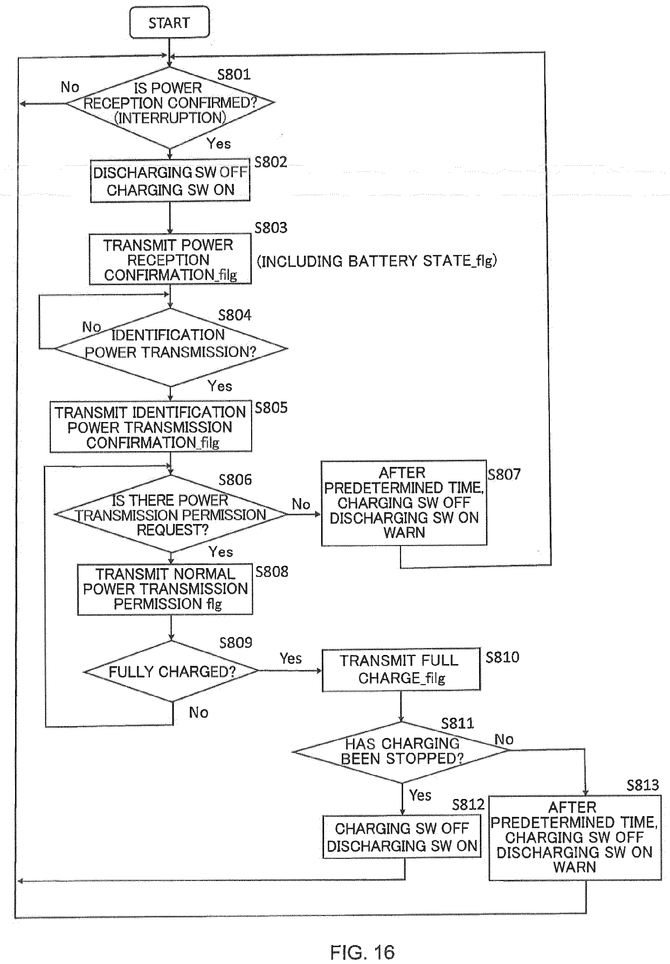

FIG. 16 is a flowchart illustrating an example of an operation of the bicycle 100 installed in a parking position. In FIG. 16, when the bicycle 100 is installed in a parking position, a switch (as an example, the switch 2-1) in the parking position is turned on. With switching on of the switch 2-1 as a trigger, the power transmission circuit 3-1 performs startup power transmission. The power-receiving circuit 6 of the bicycle 100 receives a startup signal by startup power transmission of the power transmission circuit 3-1. Because of the startup signal, a power reception voltage that is detected by the detection unit 63 that detects a power reception voltage in the power-receiving circuit 6 rises. If the CPU of the vehicle control unit 7 is in a sleep mode at this time, a rise of the power reception voltage by the startup signal is input as an external interrupt of the CPU. When an interrupt occurs, the CPU shifts from a sleep mode to the startup state (a normal control state) (Yes in Step S801). That is, an interrupt by the startup signal as a trigger causes the vehicle control unit 7 to shift from the resting state to the startup state.

The vehicle control unit 7 switches the charging switch SWc of the BMC 91 on and the discharging switch SWd off (Step S802). Thus, the BMC 91 is put in a state in which charging of the battery 96 is possible. Furthermore, if the vehicle wireless communication unit 8 is in the resting state, the vehicle control unit 7 switches the vehicle wireless communication unit 8 from the resting state to the startup state. For example, the resting state of the vehicle wireless communication unit 8 is a state in which the circuit power source is off and it is possible by turning on the circuit power source to put the vehicle wireless communication unit 8 in the startup state. The vehicle control unit 7 transmits a power reception confirmation_flg, that is, a response to the startup signal, which indicates that the startup signal has been received, to the power supply device wireless communication unit 5 (the power supply control unit 4-1) of the power supply device 10 via the vehicle wireless communication unit 8 (Step S803). The vehicle control unit 7 may be configured to transmit a battery state_flg that indicates a state of the battery 96 at this time. The battery state_flg includes, for example, information based on a state (a remaining amount or the like) of the battery 96 which is monitored by the BMC 91. For example, the battery state_flg may be information that indicates whether or not a battery is chargeable.

When the power supply control unit 4-1 of the power supply device 10 receives the power reception confirmation_flg, the power supply control unit 4-1 performs identification power transmission from the power transmission circuit 3-1. When an identification signal transmitted via identification power transmission is received in the power-receiving circuit 6 (Yes in Step S804), the vehicle control unit 7 causes the vehicle wireless communication unit 8 to transmit an identification power transmission confirmation_flg, that is, a response to the identification signal, which indicates that the identification signal has been received (Step S805). The vehicle wireless communication unit 8 transmits the identification power transmission confirmation_flg to the power supply device wireless communication unit 5 of the power supply device 10 and the power supply device wireless communication unit 5 notifies the power supply control unit 4-1 of the identification power transmission confirmation_flg.

When the power supply control unit 4-1 of the power supply device 10 receives the identification power transmission confirmation_flg, the power supply control unit 4-1 starts continuous supply of power from the power transmission circuit 3-1. That is, the power transmission circuit 3-1 continues a power transmission operation. During power supply from the power transmission circuit 3-1, the power supply control unit 4-1 causes a power transmission permission request to be transmitted from the power supply device wireless communication unit 5 to the vehicle wireless communication unit 8 at regular intervals (Yes in Step S806). If there is not a fault, the vehicle control unit 7 sends back a power transmission permission to the power transmission permission request (Step S808). If the vehicle wireless communication unit 8 has not received a power transmission permission request for a predetermined time (No in Step S806), in order to protect the battery, the vehicle control unit 7 switches the charging switch SWc of the BMC 91 off and the discharging switch SWd on to achieve a state in which charging of the battery 96 is not possible (Step S807). Thus, it is possible to avoid overcharge due to continuation of charging in a state in which a communication with the power supply device 10 cannot be performed. The vehicle control unit 7 further outputs a warning indicating that a communication with the power supply device 10 cannot be performed, for example, to the display device included in the bicycle 100 or the like. Also, the vehicle control unit 7 may be configured to transmit a stop request for stopping supply of power to the power supply control unit 4-1 of the power supply device 10 with the warning via the vehicle wireless communication unit 8.

The vehicle control unit 7 continues to send back a power transmission permission to the power transmission permission request until the battery 96 is fully charged (Yes in Step S809) (Step S808). Determination on full charge in Step S809 may be performed by detection of a charging completed state (full charge) in the BMC 91, and also, may be performed by the vehicle control unit 7, based on a battery remaining amount (SOC) that is obtained from the battery current that is detected by the BMC 91.

When the battery 96 is fully charged (Yes in Step S809), the vehicle wireless communication unit 8 transmits a full charge_flg that indicates that the battery 96 is fully charged to the power supply device wireless communication unit 5 of the power supply device 10 (Step S810). The full charge_flg is notified to the power supply control unit 4-1 from the power supply device wireless communication unit 5 and the power supply control unit 4-1 that has received the full charge_flg stops power supply from the power transmission circuit 3-1. Thus, when power reception in the power-receiving circuit 6 is stopped and charging is stopped (Yes in S811), the vehicle control unit 7 switches the charging switch SWc of the BMC 91 off and the discharging switch SWd on (Step S812). As described above, at a BMC side, it is possible to first stop, after full charge is detected, supply of power first before shutting off the charging switch SWc by a communication by the vehicle wireless communication unit 8. Thus, it is possible to prevent a rise of the power reception voltage.

If power reception in the power-receiving circuit 6 is not stopped even after a certain time has elapsed since the full charge_flg was transmitted (No in Step 811), in order to protect the battery, the vehicle control unit 7 switches the charging switch SWc of the BMC 91 off and the discharging switch SWd on (Step S813). Also, the vehicle control unit 7 outputs a warning indicating that charging is not stopped in a full charge state.

Note that, in the operation of FIG. 16, in addition to the foregoing, if a fault has been detected, the vehicle control unit 7 is able to switch the charging switch SWc off and the discharging switch SWd on in order to protect the battery. For example, if it has been detected in the BMC 91 that the temperature, current, or voltage of the battery 96 has exceeded a predetermined range, the vehicle control unit 7 is able to switch off the charging switch SWc and thus stop charging.

Besides the operation illustrated in FIG. 16, if a state in which neither charging nor discharging is performed continues for a predetermined time (for example, five to ten minutes), the vehicle control unit 7 is able to put the CPU that forms the vehicle control unit 7 in a sleep mode (a mode in which a clock used for normal control is stopped) in order to minimize discharge of the battery. At this time, the vehicle control unit 7 is able to switch the charging switch SWc off to turn off (put in a resting state) a circuit power source of a module (for example, the vehicle wireless communication unit 8) an operation of which is not necessary. In this case, the discharging switch SWd may be kept on. Thus, for example, when a power switch for use in the vehicle load 95 which is provided in the bicycle is switched on by a user, supply of power from the battery 96 is enabled. Also, when, in a state in which the CPU of the vehicle control unit 7 is in a sleep mode, the user retracts the bicycle from the parking position and then switches the power switch of the bicycle on in order to ride on the bicycle, a signal indicating that the power is on is input from a vehicle side, and therefore, using the signal as an external interrupt, it is possible to shift the CPU of the vehicle control unit 7 to a startup state (a normal battery management control state). Thus, in an operation state, the vehicle control unit 7 is able to switch itself between a startup state and a resting state and switch the vehicle wireless communication unit 8 between a startup state and a resting state.

### <Operation Example in Occurrence of Fault>

Next, in the power supply device 10, an example of processing of detecting a fault will be described. In the example illustrated in FIG. 2, the power supply control unit 4-1 monitors a DC voltage that is detected by a DC voltage detection unit 35 of the power transmission circuit 3, a DC current that is detected by a DC current sensor 36, a voltage of the power transmission coil L1, which is detected by a coil voltage detection unit 37, and temperature of the power transmission coil L1, which is detected by a temperature sensor 34. If any one of these detection values exceeds a range that has been set in advance, a fault is determined. Thus, it is possible to detect, for example, an overvoltage and an undervoltage of an input DC to the power transmission circuit 3, an overcurrent and an undercurrent of an input DC current, an overvoltage of a coil voltage, a power supply temperature abnormality, and an overvoltage and an undervoltage of a power supply voltage. If the power supply control unit 4 has detected these faults, during power supply from the power transmission circuit 3, the power supply control unit 4 stops power supply. Also, the power supply control unit 4 outputs a warning that indicates contents of the faults. The warming may be displayed on a display device included in the management device 200, and also, may be transmitted to a management server (not illustrated) in a remote location, which is connected to the power supply control unit 4 via a network.

For example, if an air gap between the power transmission coil L1 and the power-receiving coil L2 (between power transmission and reception coils) is a specified value or more due to some kind of fault (for example, overturn of a bicycle or the like) during supply of power, power is not absorbed in the power-receiving circuit 6 and a leakage of a magnetic flux increases. In this case, the voltage of the power transmission coil L1, which is detected by the coil voltage detection unit 37, increases. If the voltage of the power transmission coil L1 has exceeded a range that has been set in advance, the power supply control unit 4 is able to stop power supply of the power transmission circuit 3.

Also, if a metal dirt or a foreign substance has mixed in between the power transmission and reception coils during supply of power, temperature rises due to a loss caused by an overcurrent that has occurred in the foreign substance. For example, if the power transmission coil L1 is arranged at bottom of the power-receiving coil L2 and the power-receiving coil L2 is arranged on top of the power transmission coil L1, the foreign substance attaches to a power transmission coil L1 side. In this case, the power supply control unit 4 is able to detect a temperature rise in the power transmission coil L1 and stop power supply.

If an abnormality has been detected in the temperature, voltage, and current of the battery 96 in the BMC 91 of the bicycle 100, the vehicle control unit 7 of the bicycle 100 switches the charging switch SWc off to stop charging of the battery 96. In this case, the vehicle control unit 7 transmits a power supply stop request (an abnormality occurrence notification) to the power supply control unit 4 of the power supply device 10 via the vehicle wireless communication unit 8. When the power supply control unit 4 receives the power supply stop request, the power supply control unit 4 stops power supply by the power transmission circuit 3. In this case, the power supply control unit 4 also receives information that indicates contents of abnormality occurrence, and thereby, the power supply control unit 4 is enabled to display a wanting that informs a factor for the stop.

Also, as described above, each of the power supply control unit 4 of the power supply device 10 and the vehicle control unit 7 of the bicycle includes a charging-continuation mutual permission unit that continues, only if a reply to a power transmission permission request that is regularly transmitted from the power supply control unit 4 of the power supply device 10 has been transmitted from a power-receiving side, power supply. Therefore, even when a communication has been stopped due to a failure of a communication system, it is possible to stop power supply.

### <Example of Startup Signal>

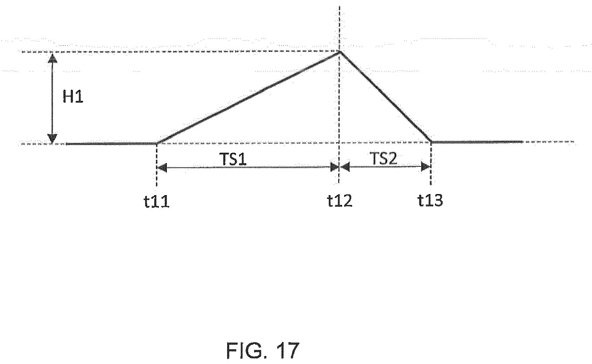

The power supply control unit 4 of the power supply device 10 is able to perform control such that a startup signal gradually rises. FIG. 17 is a diagram illustrating an example of a waveform of a startup signal, which exhibits a soft start at a rise. FIG. 17 is a diagram illustrating a waveform example of a power reception voltage of a startup signal in the power-receiving circuit 6. In FIG. 17, the abscissa indicates a time and the ordinate indicates a voltage. In this example, a rise time TS1 of the startup signal is longer than a remaining alive time TS2 of the startup signal. The rise time TS1 is a time from the occurrence (a time t11) of the startup signal to a time (a time t12) when a maximum value is reached.

The power supply control unit 4 (for example, the power supply control unit 4-1) is able to control a waveform of a startup signal by PWM control of the inverter 31 in the structure illustrated in FIG. 5. For example, at a rise of the startup signal, the power supply control unit 4 inputs a drive signal to respective gates G1 to G4 of the switching elements S1 to S4 such that a duty ratio of PWM gradually increases. For example, assuming an initial predetermined period of the startup signal as a rise period, in this rise period, it is possible to perform control to increase the duty ratio in a stepwise manner such that the duty ratio reaches a target value. Thus, it is possible to provide a soft start time in which the startup signal gradually rises. As a specific example, it is possible to start, by causing a full bridge of the inverter 31, a PWM operation in a state in which an ON-pulse width is short and to execute, by increasing a pulse width in a stepwise manner, soft switching such that the pulse width reaches a target value after a certain time.

Note that, although, in this example, an example in which a rise of the startup signal is soft-started has been described, similarly, it is also possible to cause an identification signal and a signal of power supply to rise in a soft-start manner. Also, specific soft start control is not limited to the above-described example. For example, also in PWM control using a half bridge, it is possible to cause a startup signal to gradually rise.

In this embodiment, as described above, there is a case in which the vehicle control unit 7 or the vehicle wireless communication unit 8 of the bicycle 100 that is a charging target is in a resting state. It is possible, by supplying a startup signal (an initial signal) from the power supply device 10 to the power-receiving circuit 6 of the bicycle 100, to start up the vehicle control unit 7 or the vehicle wireless communication unit 8 of the bicycle 100. For example, the power supply device 10 supplies a startup signal to the bicycle 100 in a power off state, and thereby, it is enabled to start an operation, such as charging, a communication, or the like, in the bicycle 100.

In this case, when the bicycle 100 is in a power off state, power is not input to the battery 96 and power does not go out from the battery 96. At this time, the power-receiving circuit 6 is in an electrically floating state, that is, a no-load state. There is a case in which, when the startup signal is supplied to the power-receiving circuit 6 in a non-load state from the power transmission circuit 3 and a power reception voltage rapidly rises, the power-receiving circuit 6 falls in an overvoltage state. Therefore, a withstand voltage measurement of providing a cutoff element or increasing a pressure-resistant performance of a circuit component to a sufficiently high level is necessary for the power-receiving circuit 6. In this case, as described above, it is possible, by causing a startup signal to gradually rise, to control an overvoltage state of the power-receiving circuit 6. Thus, the withstand voltage measurements of the power-receiving circuit 6 may be reduced. Therefore, increase in costs of the power-receiving circuit 6 in the bicycle 100 may be restrained.

From this point of view, for example, a lower limit of the rise time TS1 may be set longer than a time Trs which it takes for the BMC 91 in a sleep state to receive the startup signal, return from the sleep state, finish initial processing, and change its state to a power reception permitted state. In this case, the time Trs is the lower limit of the rise time TS 1. The time Trs may be, for example, a time lag from a time when the power-receiving circuit 6 receives the startup signal to a time when the battery charging switch SWc at a power reception side is turned on. An upper limit of the rise time TS1 may be, for example, a communication processing timeout time. In this case, the communication processing timeout time is a time based on which, if communication processing is longer than this, a system communication fault is determined.

Also, even when a time lag from a time when the power-receiving circuit 6 receives the startup signal to a time when the battery charging switch at the power reception side is turned on is substantially negligibly short, it is possible to soft- start a startup signal in order to reduce an inrush current at the time when the power transmission circuit 3 is driven. Specifically, when a PWM switching operation of the inverter 31 shifts from a resting state to an operation state, a circuit voltage suddenly rises to a highest voltage (a peak voltage) at a power source side. Therefore, there is a case in which, depending on a load (an inductance load for which an excitation current is necessary or a capacitance load of a capacitor or the like) that the inverter 31 drives, a large current (which is sometimes referred to as an inrush current or a rush current) instantaneously flows. In order to reduce this inrush current, as described above, the duty ratio of a PWM signal is controlled so as to be very small at the time of a start of an operation and gradually increase to a predetermined duty ratio. This is an example of a soft start. In this case, it is possible to cause the rise time TS1 to be longer than a time which it takes for the inrush current to fall in a predetermined range. That is, it is possible to set the rise time TS1 in accordance with a circuit voltage, power that is handled, or the like.

### [Modified Examples]

In the above-described embodiment, a plurality of switches 2, a plurality of power transmission circuits 3, and a plurality of power supply control units 4 are provided for each of a plurality of parking positions. In contrast, a power supply device which includes a single switch 2, a single power transmission circuit 3, a single power supply control unit 4, and a single power supply device wireless communication unit 5 is included in an embodiment of the present teaching. In this case, the switch 2, the power transmission circuit 3, and the power supply device wireless communication unit 5 may be configured similar to those in the above-described embodiment. The power supply control unit 4 may be caused to operate in a similar manner to a manner in which the above-described power supply control unit 4-1 that serves as the master operates. Also, a straddle-type vehicle that is a target of the present teaching is not limited to a bicycle and may be, for example, a motorcycle.

In the above-described embodiment, when the switch 2 at one parking position is turned on and power supply is started, power supply in another parking position is temporarily stopped. Thus, a communication with a bicycle via the power supply device wireless communication unit 5 is easily established. In contrast, depending on a specification of the power supply device wireless communication unit 5, there is possibly a case in which, even while power supply to the another parking position continues, it is possible to establish a communication between the bicycle in the parking position in which the switch 2 has been turned on and the power supply device wireless communication unit 5 and start power supply.

Also, in addition to a case in which the power supply control unit 4 of the power supply device 10 or the vehicle control unit 7 of the bicycle 100 is configured by a single CPU, the power supply control unit 4 or the vehicle control unit 7 may be configured so as to be dispersed in a plurality of computers (control ICs).

Note that the wireless power transmission system between the power transmission circuit 3 and the power-receiving circuit 6 is not limited to an electromagnetic induction type or a magnetic resonance type. For example, an electromagnetic wave type which receives an electromagnetic wave that is transmitted from the power transmission circuit 3 by the power-receiving circuit 6, converts the electromagnetic wave to a DC current, and uses the DC current as power, an electric field coupling type which uses an electric field coupling of a capacitor formed in a state an electrode included in a power transmission circuit and an electrode included in a power-receiving circuit are disposed to oppose to one another with an insulating layer interposed therebetween to transmit power, or the like may be used.

In the above-described embodiment, the switch 2 is in conjunction with a lock state of a lock mechanism but the switch 2 may be configured to switch independently from the lock mechanism. For example, in a parking lot in which there is not a lock mechanism, a switch that switches by being touched by a part of a straddle-type vehicle or a switch that switches in accordance with a detection result of a sensor that detects that a straddle-type vehicle is located in a predetermined position may be used.

Also, the switch 2 in the above-described embodiment is an example of a parking detection unit that detects, based on a physical position of a straddle-type vehicle, without using a vehicle wireless communication unit that the straddle-type vehicle has been installed in a parking position. As a switch as the above-described parking detection unit, a contact type switch that detects, by being pushed by a straddle-type vehicle, installation of the straddle-type vehicle in a parking position may be employed. As another option, as the parking detection unit, a detection unit that detects, by an optical sensor, a physical position of a straddle-type vehicle, a detection unit that detects, by an ultrasonic wave sensor, a physical position of a straddle-type vehicle, a detection unit that detects, by a weight sensor, a physical position of a straddle-type vehicle, or a detection unit that detects a physical position of a straddle-type vehicle using some other sensor may be used. Using any one of the above-described parking detection units, it is possible to detect that a straddle-type vehicle has been installed in a parking position without using a wireless communication between a power supply device wireless communication unit and a vehicle wireless communication unit.

The lock mechanism that locks a straddle-type vehicle that has been installed in the above-described parking position is not limited to the above-described example. As a configuration in which a straddle-type vehicle is locked, as in the above-described example, in addition to a configuration in which a rotation of a wheel of the straddle-type vehicle is inhibited and thereby the straddle-type vehicle is put in a state in which the straddle-type vehicle cannot be moved from the parking position, a configuration in which a movement of some other part of a straddle-type vehicle than a wheel thereof is restricted and thereby the straddle-type vehicle is in a state the straddle type vehicle cannot be moved from the parking position may be used. Also, a configuration in which a straddle-type vehicle is locked may be a configuration in which a wheel and other parts are fixed so as not to move or a configuration in which a range in which a wheel and other parts move is limited.

The initial signal is a signal or a group of signals which is initially transmitted after a straddle-type vehicle has been installed in a parking position. The initial signal is a signal that is a trigger for starting power supply. The initial signal is transmitted between installation of a straddle-type vehicle in a parking position and a start of power supply. There is also a case in which, for example, as the above-described startup signal and identification signal, the initial signal includes a series of signal groups that are transmitted between installation of a straddle-type vehicle in a parking position and a start of power supply.

A start of power supply from a power transmission coil to a power-receiving coil means, for example, a start of an operation of continuously supplying an amount of power collected to a certain extent, such as power of an amount which is receivable in a battery or the like. The initial signal, such as a startup signal, an identification signal, or the like, in this embodiment is not supply of power.

The wireless power supply device of the above-described embodiment includes a detection unit that detects, based on a physical position of a straddle-type vehicle, without using a vehicle wireless communication unit that the straddle-type vehicle has been installed in a parking position. Thus, even when the vehicle wireless communication unit is not started, that is, even when the vehicle wireless communication unit is not in a startup state, it is possible to detect that the straddle-type vehicle has been set in a parking position. The wireless power supply device may include, in addition to the detection unit that detects installation of a straddle-type vehicle, based on a physical position of the straddle-type vehicle, a function of detecting that a straddle-type vehicle has been installed in a parking position via a wireless communication using the vehicle wireless communication unit. For example, detection of installation of a straddle-type vehicle using a wireless communication with the vehicle wireless communication unit and detection of installation of a straddle-type vehicle without using a wireless communication with the vehicle wireless communication unit may be used in combination.

### REFERENCE SIGNS LIST

- 2, 2-1, 2-2, 2-3: Switch
- 3, 3-1, 3-2, 3-3: Power transmission circuit
- 4, 4-1, 4-2, 4-3: Control unit
- 5: Communication unit
- 6: Power-receiving circuit
- 7: Control unit
- 8: Wireless communication unit
- 9: Battery unit
- 10: Power supply device
- 11: Rack
- 15: Locking device
- 100: Bicycle (Straddle-type vehicle)

## Claims

1. A wireless power supply device comprising:
a power transmission circuit including a power transmission coil that wirelessly supplies power to a power-receiving circuit that is included in a straddle-type vehicle that has been installed in a parking position and includes a power-receiving coil;
a power supply device wireless communication unit that is able to wirelessly communicate with a vehicle wireless communication unit included in the straddle-type vehicle that has been installed in the parking position; and
a power supply control unit that controls a power supply by the power transmission circuit, based on a result of a communication with the vehicle wireless communication unit via the power supply device wireless communication unit,
wherein the wireless power supply device further includes a parking detection unit that detects, based on a physical position of the straddle-type vehicle, without using the vehicle wireless communication unit that the straddle-type vehicle has been installed in the parking position, and
the power supply control unit supplies an initial signal to the power-receiving coil of the power-receiving circuit of the straddle-type vehicle that has been installed in the parking position from the power transmission coil of the power transmission circuit and starts a supply of power to the power-receiving coil of the power-receiving circuit of the straddle-type vehicle from the power transmission circuit, if the power supply device wireless communication unit has received a response to the initial signal, which has been transmitted from the vehicle wireless communication unit.

2. The wireless power supply device according to claim 1, further comprising:
a lock mechanism that locks the straddle-type vehicle that has been installed in the parking position,
wherein, when the lock mechanism locks the straddle-type vehicle, the parking detection unit detects, based on the physical position of the straddle-type vehicle, that the straddle-type vehicle has been installed in the parking position.

3. The wireless power supply device according to claim 1 or 2,
wherein the power supply control unit is switchable between a startup state in which the control is executable and a resting state in which all or a part of a processing performed for the control is stopped and power consumption is lower than in the startup state, and
when it is detected by the parking detection unit that the straddle-type vehicle has been installed in the parking position, the power supply control unit switches to the startup state, if the power supply control unit is in the resting state.

4. The wireless power supply device according to any one of claims 1 to 3,
wherein, after starting the supply of power to the power-receiving coil of the power-receiving circuit of the straddle-type vehicle from the power transmission coil of the power transmission circuit, the power supply control unit regularly transmits a power transmission confirmation request to the vehicle wireless communication unit of the straddle-type vehicle via the power supply device wireless communication unit and stops the power supply by the power transmission circuit, if the power supply device wireless communication unit has not been able to receive a response to the power transmission confirmation request from the vehicle wireless communication unit of the straddle-type vehicle consecutively a predetermined number of times or more.

5. A wireless power supply device comprising:
a plurality of power transmission circuits each of which includes a power transmission coil that wirelessly supplies power to a corresponding one of power-receiving circuits, which is included in a straddle-type vehicle that has been installed in a corresponding one of a plurality of parking positions, and includes a power-receiving coil;
a power supply device wireless communication unit that is able to wirelessly communicate with a corresponding one of vehicle wireless communication units included in the plurality of straddle-type vehicles that have been installed in the plurality of parking positions; and
a power supply control unit that controls a power supply by a corresponding one of the plurality of power transmission circuits, based on a result of a communication between the vehicle wireless communication unit of a corresponding one of the straddle-type vehicles that have been installed in the plurality of parking positions and the power supply device wireless communication unit,
wherein the wireless power supply device further includes a plurality of parking detection units each of which is provided so as to correspond to a corresponding one of the plurality of parking positions and detects, based on a physical position of the straddle-type vehicle, without using the vehicle wireless communication unit that the straddle-type vehicle has been installed in the corresponding parking position, and
when it is detected by one of the plurality of parking detection units that the straddle-type vehicle has been installed in the parking position that corresponds to the one of the parking detection units, the power supply control unit supplies an initial signal to the power-receiving coil of the straddle-type vehicle that has been installed in the corresponding parking position from the power transmission circuit in the corresponding parking position and starts a supply of power from one of the plurality of power transmission circuits to the power-receiving coil of the power-receiving circuit of the straddle-type vehicle that has been installed in the corresponding parking position, if the power supply device wireless communication unit has received a response to the initial signal, which has been transmitted from the vehicle wireless communication unit of the straddle-type vehicle that has been installed in the corresponding parking position.

6. The wireless power supply device according to claim 5,
wherein the power supply control unit includes a plurality of power supply control units that are provided so as to correspond to the plurality of parking positions, and at least one of the plurality of power supply control units is connected to the power supply device wireless communication unit via a wire and controls another one of the power supply control units, based on a result of a communication between the power supply device wireless communication unit and a corresponding one of the vehicle wireless communication units of the straddle-type vehicles that have been installed in the plurality of parking positions.

7. The wireless power supply device according to claim 5 or 6,
wherein, when it is detected by one of the plurality of parking detection units that the straddle-type vehicle has been installed in one of the plurality of parking positions which corresponds to the one of the parking detection units, and if power is supplied from the power transmission coil of the power transmission circuit in another one of the parking positions to the power-receiving coil of another one of the straddle-type vehicles which has been installed in the another one of the parking positions, the power supply from the power transmission coil of the power transmission circuit in the another one of the parking positions is stopped and the initial signal is transmitted to the power-receiving coil of the straddle-type vehicle that has been installed in the one of the parking positions from the power transmission coil of the power transmission circuit in the one of the parking positions.

8. The wireless power supply device according to any one of claims 1 to 7,
wherein a rise of the initial signal is controlled such that a signal voltage increases with time.

9. A straddle-type vehicle comprising:
a battery;
a power-receiving circuit including a power-receiving coil that wirelessly receives a supply of power from a power transmission coil of a power supply device;
a charging circuit that monitors a state of the battery and controls charging of the battery by the power that has been received via the power-receiving circuit;
a vehicle wireless communication unit that wirelessly communicates with a power supply device wireless communication unit included in the power supply device and transmits information based on the state of the battery, which has been monitored by the charging circuit; and
a vehicle control unit that controls the power-receiving circuit, the charging circuit, and the vehicle wireless communication unit,
wherein the vehicle wireless communication unit is switchable between a startup state in which the communication is executable and a resting state in which all or a part of the processing performed for the communication is stopped and power consumption is lower than in the startup state, and
if the power-receiving coil of the power-receiving circuit has received an initial signal from the power transmission coil of the power supply device, the vehicle control unit puts the vehicle wireless communication unit in a startup state, causes the vehicle wireless communication unit to transmit a response to the initial signal to the power supply device wireless communication unit, and puts the charging circuit in a state in which the battery is able to be charged.

10. The straddle-type vehicle according to claim 9,
wherein the vehicle control unit is switchable between a startup state in which the control is executable and a resting state in which all or a part of the processing performed for the control is stopped and power consumption is lower than in the startup state, and
the vehicle control unit switches to the startup state, if the vehicle control unit is in the resting state when the power-receiving circuit receives the initial signal.

11. The straddle-type vehicle according to claim 9 or 10,
wherein the initial signal includes a startup signal and an identification signal,
if the power-receiving coil of the power-receiving circuit has received the startup signal, the vehicle control unit puts the vehicle wireless communication unit in a startup state to achieve a state in which a communication with the power supply device wireless communication unit is possible, and
if the power-receiving coil of the power-receiving circuit has received the identification signal after the startup signal, the vehicle control unit causes the vehicle wireless communication unit to transmit a response to the identification signal to the power supply device wireless communication unit.

12. A method for wirelessly supplying power to a straddle-type vehicle from a power supply device, the method comprising:
detecting that the straddle-type vehicle has been installed in a parking position, based on a physical position of the straddle-type vehicle and without using a vehicle wireless communication unit included in the straddle-type vehicle and a power supply device wireless communication unit that is included in the power supply device and is able to wirelessly communicate with the vehicle wireless communication unit;
if an installation of the straddle-type vehicle in the parking position has been detected, starting up the vehicle wireless communication unit of the straddle-type vehicle by suppling an initial signal to a power-receiving coil of a power-receiving circuit included in the straddle-type vehicle from a power transmission coil of a power transmission circuit that is included in the power supply device and provided in the parking position;
receiving, by the power supply device wireless communication unit, a response to the initial signal from the vehicle wireless communication unit via a wireless communication;
if the power supply device wireless communication unit has received the response to the initial signal, starting a supply of power to the power-receiving coil of the power-receiving circuit of the straddle-type vehicle from the power transmission coil of the power transmission circuit; and
after the supply of power to the power-receiving coil of the power-receiving circuit from the power transmission coil of the power transmission circuit has been started, controlling a power supply to the power-receiving coil from the power transmission coil of the power transmission circuit, based on a result of a wireless communication between the power supply device wireless communication unit and the vehicle wireless communication unit of the straddle-type vehicle.
